(19) Europäisches Patentamt
European Patent Office
Office européen des brevets

(11) **EP 3 424 200 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **17709037.0**

(22) Anmeldetag: **03.03.2017**

(51) Internationale Patentklassifikation (IPC):
***H04L 67/566*** *(2022.01)*

(52) Gemeinsame Patentklassifikation (CPC):
**H04L 67/566;** H04L 67/06

(86) Internationale Anmeldenummer:
**PCT/EP2017/055092**

(87) Internationale Veröffentlichungsnummer:
**WO 2017/149149 (08.09.2017 Gazette 2017/36)**

(54) **KENNUNGSCODIERUNGSEINRICHTUNG UND KENNUNGSDECODIERUNGSEINRICHTUNG ZUR DATENVERTEILUNG IN NETZWERKEN SOWIE DERARTIGE EINRICHTUNGEN AUFWEISENDE NETZWERKELEMENTE**

IDENTIFICATION CODING DEVICE AND IDENTIFICATION CODING DEVICE FOR DATA DISTRIBUTION IN NETWORKS, AND NETWORK ELEMENTS COMPRISING SUCH DEVICES

DISPOSITIF DE CODAGE D'IDENTIFICATION ET DISPOSITIF DE DÉCODAGE D'IDENTIFICATION POUR LA DISTRIBUTION DE DONNÉES DANS DES RÉSEAUX, ET ÉLÉMENTS DE RÉSEAUX COMPORTANT DES DISPOSITIFS DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2016 DE 102016103880**
**03.03.2016 DE 102016103882**
**29.04.2016 DE 102016108018**

(43) Veröffentlichungstag der Anmeldung:
**09.01.2019 Patentblatt 2019/02**

(73) Patentinhaber: **Cadami GmbH**
**81667 München (DE)**

(72) Erfinder:
• **DOTZLER, Andreas**
**80333 München (DE)**
• **HEINDLMAIER, Michael**
**85386 Eching (DE)**
• **RIEMENSBERGER, Maximilian**
**85386 Eching (DE)**

(74) Vertreter: **Kastel, Stefan et al**
**Kastel Patentanwälte**
**St.-Cajetan-Straße 41**
**81669 München (DE)**

(56) Entgegenhaltungen:
**DE-A1-102014 102 898**

• **PEMMARAJU S AND SKIENA S: "COMPUTATIONAL DISCRETE MATHEMATICS", 1. Januar 2003 (2003-01-01), CAMBRIDGE UNIVERSITY PRESS, XP008184626, ISBN: 978-0-521-80686-2 Seiten 53-90, [gefunden am 2012-06-01] Abschnitt 2.3, darin insbesondere Abschnitt 2.3.4**

**Beschreibung**

Die Erfindung betrifft eine Kennungscodierungseinrichtung zur Zuordnung einer Kennung zu einer Elementliste zum Zweck der Datenverteilung in einem Netzwerk, wobei die Elementliste eine Mehrzahl von aus einer Elementmenge ausgewählten Elementen aufweist, wobei jedes Element durch eine ganze Zahl repräsentiert ist und wobei die Elementmenge eine vorbestimmte Gesamtzahl von Elementen aufweist. Des Weiteren betrifft die vorliegende Erfindung eine Kennungsdecodierungseinrichtung zur Zuordnung einer Elementliste zu einer Kennung zum Zwecke der Verteilung von Daten in einem Netzwerk, wobei die Kennung eine ganze Zahl ist, wobei die zu ermittelnde Elementliste eine Mehrzahl von aus einer Elementmenge ausgewählten Elementen aufweist, wobei jedes Element durch eine ganze Zahl repräsentiert ist und wobei die Elementmenge eine vorbestimmte Gesamtzahl von Elementen aufweist. Darüber hinaus betrifft die vorliegende Erfindung eine Cachezuordnungseinrichtung, eine Gruppencodierungseinrichtung, eine Koordinierungseinrichtung und eine Dateisystemeinrichtung, die jeweils wenigstens eine Kennungsdecodierungseinrichtung oder eine Kennungsdecodierungseinrichtung aufweisen.

Die Verteilung von großen Datenmengen an Endgeräte in paketvermittelten Netzwerken, insbesondere in Mobilfunknetzen, findet derzeit hauptsächlich durch so genannte Punkt zu Punkt-Verbindungen statt. Jedes der Endgeräte kann zu diesem Zweck Verbindungen über das Netzwerk mit einem Server, auf dem die Daten abgelegt sind, aufbauen. Dies kann beispielsweise mittels TCP/IP-Verbindungen geschehen, mittels derer Dateien von dem Server herunterladbar sind. Eine Anforderung über derartige Verbindungen führt dazu, dass die jeweils angeforderte Datei vollständig übertragen werden muss. Dies ist auch dann der Fall, wenn mehrere Endgeräte dieselbe Datei anfordern. Das Netzwerk wird in diesem Fall für jedes Endgerät erneut mit den Daten der Datei belastet, wodurch die benötigte Bandbreite erhöht wird.

Es sind verschiedene Lösungsansätze dafür bekannt, die Bandbreite für derartige Dateiübertragungen für den Fall zu reduzieren, dass es sich bei den großen Datenmengen um einen Datenbestand handelt, aus dem unterschiedliche Endgeräte häufig dieselben Daten anfordern werden. So ist es beispielsweise möglich, zu Zeiten, in denen das Netzwerk nur wenig genutzt wird, häufig angeforderte Elemente des Datenbestands vorsorglich an die Endgeräte zu übertragen. Die Endgeräte legen diese Elemente, die im Wesentlichen Dateien, Datenblöcke oder Dateifragmente sind, in einem Cachespeicher ab.

Fordern zwei Endgeräte nunmehr Elemente an, die in dem jeweils anderen Endgerät bereits in dem Cachespeicher vorgehalten werden, so kann der Server die beiden angeforderten Elemente miteinander zu einem einzelnen Datenblock mit der Länge eines einzelnen Elements verknüpfen und diesen als Broadcast an alle Endgeräte gleichzeitig versenden. Die Endgeräte können anschließend unter Zuhilfenahme der bereits vorhandenen Elemente in ihrem Cachespeicher aus dem so übermittelten Datenblock die angeforderten Daten rekonstruieren. Dieses Verfahren ist gegebenenfalls auch dazu geeignet, mehr als zwei Datenblöcke gemeinsam zu codieren und somit für die Übertragung einer Vielzahl von Datenblöcken lediglich Bandbreite entsprechend in etwa einem einzigen Datenblock zu verbrauchen.

Beispiele für derartige Verfahren finden sich in der US 2015/0207881 A1, der US 2015/0207895 A1, der US 2015/0207896 A1 und der US 2012/0254459 A1. Des Weiteren sind aus der DE 10 2014 102 898 A1 Verfahren und Vorrichtungen zur Verteilung großer Datenmengen bekannt.

Aus der Druckschrift

PEMMARAJU S AND SKIENA S: COMPUTATIONAL DISCRETE MATHEMATICS, CAMBRIDGE UNIVERSITY PRESS, US, 1. Januar 2003, PAGE(S) 53 - 90 (Chapter "Permutations and combinations"), ISBN: 978-0-521-80686-2 ist ein Algorithmus bekannt, der einer Teilmenge einer Menge von ganzen Zahlen 1 bis N, einen eindeutigen Rang zuordnet, wobei die Teilmenge eine vorbestimmte Anzahl von Elementen aufweist. Des Weiteren ist ein Algorithmus bekannt, der aus dem Rang die Teilmenge erzeugen kann.

Um die Identifikation der in einem Cachespeicher eines Endgeräts vorhandenen Elemente bzw. Datenblöcke und/oder der Endgeräte, die ein bestimmtes Element in ihrem Cachespeicher vorhalten, zu ermöglichen, werden diese Elemente oder Endgeräte jeweils als Mengen oder Listen zusammengefasst und eindeutig identifizierbaren Elementemengen oder -listen Kennungen zugeordnet, mittels derer die Ermittlung der zu verknüpften Elemente vereinfacht wird. Für die damit verbundenen Zuordnungsvorgänge wird entweder eine große Rechenleistung zum Durchlaufen aller möglichen Zuordnungen oder eine große Menge Speicher zur Ablage vorberechneter Zuordnungen benötigt.

Die Erfindung geht auf die Aufgabe zurück, Vorrichtungen und Verfahren zu schaffen, welche die oben beschriebene Datenverteilung ressourcenschonender durchführen und an die besonderen Bedürfnisse von Endgeräten in Mobilfunknetzen angepasst sind.

Zur Lösung werden eine Kennungscodierungseinrichtung gemäß Anspruch 1 und eine Kennungsdecodierungseinrichtung gemäß Anspruch 2 vorgeschlagen. Diese Einrichtungen haben gegenüber den bekannten Lösungen den Vorteil, dass nicht alle theoretisch möglichen Zuordnungen von Kennungen zu Elementlisten kombinatorisch ermittelt und verifiziert werden müssen. Darüber hinaus ist der Speicherbedarf auf wenige kompakt speicherbare Variablen beschränkt. Somit ist sowohl die zum Aufbau und der Verwendung der Vorrichtungen notwendige Rechenleistung als auch der Speicherbedarf reduziert.

Die Aufgabe wird darüber hinaus durch eine Cachezuordnungseinrichtung gemäß Anspruch 3 gelöst, die eine Kennungsdecodierungseinrichtung aufweist, mittels derer aus einer Anzahl von Gruppenkennungen, einem Codierungsparameter, einer Gruppenkennung, einer Datenblockkennung und einer Dateikennung eine Elementliste erzeugbar ist, in der Gruppenkennungen enthalten sind, deren Endgeräte einen durch die Datenblockkennung identifizierbaren Datenblock zwischenspeichern sollen. Die Cachezuordnungseinrichtung weist vorteilhaft eine Entscheidungseinrichtung auf, die zum Auffinden der Gruppenkennung in der Elementliste ausgebildet ist, wobei die Cachezuordnungseinrichtung zur Erzeugung eines Zwischenspeichersignals ausgebildet ist, sofern die Gruppenkennung in der Elementliste enthalten ist und wobei die Cachezuordnungseinrichtung zur Erzeugung eines Nichtzwischenspeichersignals ausgebildet ist, sofern die Gruppenkennung nicht in der Elementliste enthalten ist. Das Zwischenspeichersignal kann beispielsweise ein Endgerät dazu anweisen, den Datenblock in einen Cachespeicher aufzunehmen und das Nichtzwischenspeichersignal kann ein Endgerät dazu anweisen, den Datenblock nicht in den Cachespeicher aufzunehmen. Beispielsweise kann ein in seinen verfügbaren Ressourcen beschränktes Endgerät mittels der Cachezuordnungsvorrichtung vereinfacht ermitteln, ob es einen ihm übermittelten Datenblock zwischenspeichern soll.

Des Weiteren wird die Aufgabe durch eine Gruppencodierungseinrichtung zum Ermitteln einer Liste von gemeinsam codierbaren Anforderungen aus einer Liste von wartenden Anforderungen gemäß Anspruch 4 gelöst, wobei jede Anforderung wenigstens eine Gruppenkennung und eine Datenblockkennung aufweist, wobei die Gruppencodierungseinrichtung zur Verarbeitung einer ausgewählten Anforderung aufweist: eine Kennungsdecodierungseinrichtung zum Ermitteln einer Liste der Gruppenkennungen, in deren zugeordneten Cachespeichern der Datenblock mit der angeforderten Kennung vorgehalten wird, eine Kandidatenermittlungseinrichtung zum Ermitteln einer Liste aller Gruppenkennungen und Listen, die sich durch Entnehmen einer Gruppenkennung aus der Liste und Einsetzen der Gruppenkennung der ausgewählten Anforderung in die Liste ergeben; eine Kennungscodierungseinrichtung zum Ermitteln einer Liste von Gruppenkennungen und Datenblockkennungen aus der Liste, wobei die Kennungscodierungseinrichtung jeder Liste aus der Liste eine Kennung zuweist, wobei die Kennungscodierungseinrichtung gemäß Patentanspruch 1 ausgebildet ist, und eine Anforderungsauswahleinrichtung zum Ermitteln einer Liste mittels Verknüpfung der Liste und der Liste von wartenden Anforderungen, dass je Eintrag (i',c') der Liste höchstens ein Eintrag der Liste der Form (i, f, c) derart zur Aufnahme in die Liste ausgewählt wird, dass i'=i und c'=c. Dadurch ist insbesondere die Ermittlung von gemeinsam codierbaren Datenblöcken anhand der angeforderten Datenblöcke auf ressourcenschonende Weise möglich.

Zur Lösung der Aufgabe wird auch eine Kommunikationseinrichtung zum Umsetzen von Informationen über einen gemeinsam codierten Datenblock in Kopfdaten gemäß Anspruch 5 vorgeschlagen, wobei der Kommunikationseinrichtung als Informationen über den Datenblock eine Liste von Gruppenkennungen, eine Liste von Dateikennungen sowie ein Systemparameter übergeben werden, wobei die Kommunikationseinrichtung eine Kennungscodierungseinrichtung zur Umsetzung der Liste von Gruppenkennungen in einen Index und eine Kopfdatenerzeugungseinrichtung zur Umsetzung des Index zusammen mit der Liste von Dateikennungen in Kopfdaten aufweist. Durch die Umsetzung der Liste von Gruppenkennungen in einen Index wird die über ein Netzwerk zu übertragende Datenmenge reduziert und somit der mögliche Nutzdatenanteil in diesem Netzwerk verbessert.

Zur Lösung der Aufgabe wird gemäß Anspruch 6 auch eine Dateisystemeinrichtung zum Zuweisen einer lokalen Datenblockkennung zu einer Datenblockkennung, mit einer Kennungsdecodierungseinrichtung zum Erstellen einer Liste von Gruppenkennungen der den mit der Datenblockkennung bezeichneten Datenblock vorhaltenden Gruppen, einer Abbildungseinrichtung zum Umsetzen der Liste und einer Kennungscodierungseinrichtung zum Erhalten der lokalen Datenblockkennung aus der umgesetzten Liste, vorgeschlagen. Die Kennungsdecodierungseinrichtung und/oder die Kennungscodierungseinrichtung sind insbesondere gemäß einer hierin bzw. zuvor beschriebenen Ausführungsart ausgebildet.

Die Aufgabe wird darüber hinaus durch eine Dateisystemeinrichtung gemäß Anspruch 7 zum Ermitteln einer Datenblockkennung zu einer lokalen Datenblockkennung, mit einer Kennungsdecodierungseinrichtung zum Erstellen einer Liste von Gruppenkennungen, einer Abbildungseinrichtung zum Umsetzen der Liste und einer Kennungscodierungseinrichtung zum Erhalten der Datenblockkennung aus der umgesetzten Liste gelöst. Die Kennungsdecodierungseinrichtung und/oder die Kennungscodierungseinrichtung sind insbesondere gemäß einer hierin bzw. zuvor beschriebenen Ausführungsart ausgebildet.

Zur Lösung werden ferner komplementäre Verfahren gemäß den Ansprüchen 10 und 12 vorgeschlagen. Diese Verfahren haben gegenüber den bekannten Lösungen den Vorteil, dass nicht alle möglichen Zuordnungen kombinatorisch ermittelt und verifiziert werden müssen. Darüber hinaus ist der Speicherbedarf auf wenige kompakt speicherbare Variablen beschränkt. Somit ist sowohl die für die Durchführung des Verfahrens notwendige Rechenleistung als auch der Speicherbedarf reduziert.

Vorteilhaft kann gemäß den Ansprüchen 11 und 13 vorgesehen sein, dass anstatt einer individuellen Berechnung der Binomialkoeffizienten eine vorberechnete Tabelle dieser Koeffizienten zum Einsatz kommt. Hierdurch wird die notwendige Rechenleistung weiter reduziert, indem eine geringfügige Vergrößerung des Speicherbedarfs in Kauf genommen wird.

Die Aufgabe wird darüber hinaus durch ein Netzwerk gemäß Anspruch 8 gelöst, bei dem wenigstens ein Endgerät eine Zuordnungseinrichtung aufweist, die zur Durchführung eines der oben genannten Verfahren ausgebildet ist.

Ebenso wird die Aufgabe durch ein Netzwerk gemäß Anspruch 9 gelöst, bei dem wenigstens ein Server an das Netzwerk angeschlossen ist, der eine Zuordnungseinrichtung aufweist, die zur Durchführung eines der oben genannten Verfahren ausgebildet ist.

Die Erfindung wird nachfolgend anhand von Zeichnungen näher erläutert, welche die Erfindung lediglich schematisch zeigen und den Schutzbereich nicht beschränken sollen. Es zeigen im Einzelnen:

Fig. 1　ein Flussdiagramm eines Verfahrens zur Ermittlung einer Kennung zu einer Elementliste gemäß einer ersten Ausführungsform der Erfindung;

Fig. 2　ein Flussdiagramm eines Verfahrens zur Ermittlung einer Elementliste zu einer Kennung gemäß einer ersten Ausführungsform der Erfindung;

Fig. 3　eine Übersicht über ein Netzwerk zur Verteilung von Daten an Endgeräte in dem Netzwerk;

Fig. 4　eine Übersicht über Endgeräte und deren Speichereinrichtungen in dem Netzwerk;

Fig. 5　eine Übersicht über Endgeräte und deren Speichereinrichtungen in einem weiteren Netzwerk;

Fig. 6　einen schematischen Aufbau einer Cachezuordnungseinrichtung gemäß einer Ausführungsform der vorliegenden Erfindung;

Fig. 7　einen schematischen Aufbau einer Gruppencodierungseinrichtung gemäß einer Ausführungsform der vorliegenden Erfindung;

Fig. 8　einen schematischen Aufbau einer Koordinierungseinrichtung gemäß einer Ausführungsform der vorliegenden Erfindung;

Fig. 9　einen schematischen Aufbau einer Dateisystemeinrichtung gemäß einer Ausführungsform der vorliegenden Erfindung und

Fig. 10　einen schematischen Aufbau einer Dateisystemeinrichtung komplementär zu der Dateisystemeinrichtung aus Fig. 9.

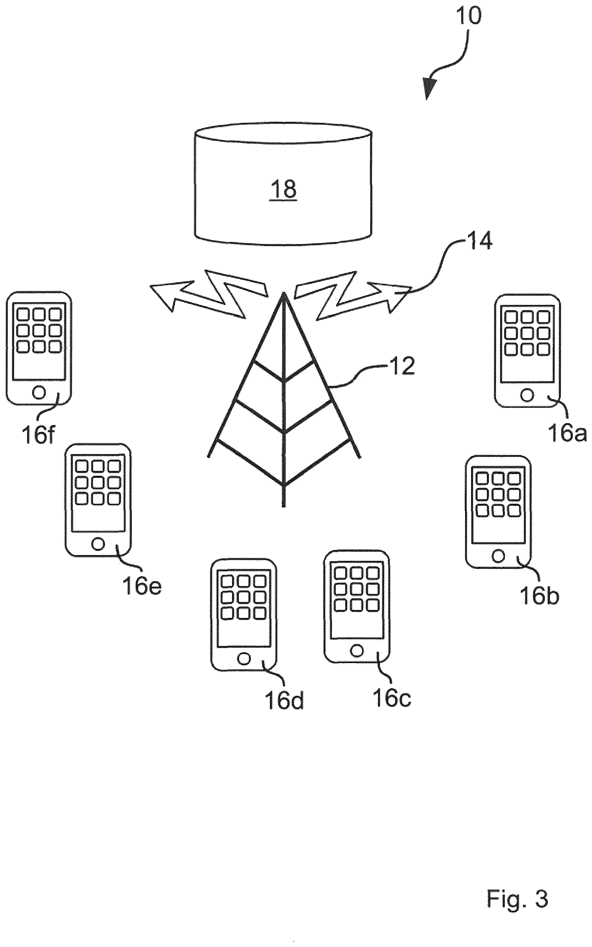

Das in Fig. 3 gezeigte Netzwerk 10 ist beispielsweise als Mobilfunknetzwerk ausgestaltet. Das Mobilfunknetzwerk 10 weist eine Basisstation 12 auf, die mittels eines Mediums 14, beispielsweise mittels elektromagnetischer Wellen, mit einer Vielzahl von Endgeräten 16a-16f kommunizieren kann. An das Netzwerk 10 ist eine Datenbereitstellungseinrichtung (Server) 18 angeschlossen, die Daten zum Abruf durch die Endgeräte 16a-16f bereithält.

Die Endgeräte 16a-16f können über das Mobilfunknetzwerk 10, beispielsweise unter Verwendung des IP-Protokolls, Daten von der Datenbereitstellungseinrichtung 18 abrufen. Diese Daten werden anschließend über das Mobilfunknetzwerk 10 an die Endgeräte 16a-16f übermittelt. Das Medium 14 verfügt über eine begrenzte Bandbreite, wodurch die Menge der je Zeiteinheit übertragbaren Daten begrenzt ist. In einem drahtlosen Medium 14 teilen sich die dieses benutzenden Endgeräte 16a-16f die verfügbare Bandbreite. Dadurch kann die Übertragung der von einem der Endgeräte 16a-16f angeforderten Daten verlangsamt sein, wenn von den Endgeräten 16a-16f große Mengen Daten angefordert werden.

Die Menge der angeforderten Daten in real existierenden Mobilfunknetzwerken 10 ist gewöhnlich von der Tageszeit abhängig. So werden beispielsweise Videos, die besonders große Datenmengen umfassen, häufig abends angefordert, so dass Mobilfunknetzwerke 10 zu dieser Zeit besonders ausgelastet sind. In den frühen Morgenstunden hingegen werden nur wenige Daten angefordert, so dass in dem Mobilfunknetzwerk 10 zu diesem Zeitpunkt große ungenutzte Kapazitäten vorgehalten werden.

Aus diesem Umstand ergibt sich das Bestreben, häufig angeforderte Daten, beispielsweise Daten einer Online-Videobibliothek, zu Zeiten vorsorglich zu übermitteln, in denen die Auslastung des Mobilfunknetzes 10 gering ist, so dass eine erneute Übertragung zu Zeiten, zu denen die Auslastung des Mobilfunknetzes 10 hoch ist, nicht mehr notwendig ist.

Gewöhnlich weisen Videobibliotheken allerdings so viele Daten auf, dass ein vollständiges Zwischenspeichern auf mobilen Endgeräten 16a-16f aufgrund der beschränkten Größe der in diesen enthaltenen Speichereinrichtungen nicht praktisch umsetzbar ist. Darüber hinaus sind derzeit die in Mobilfunknetzwerken 10 verfügbaren Bandbreiten nicht für eine regelmäßige vorsorgliche Übertragung derartiger Datenmengen geeignet.

Insbesondere in Mobilfunknetzwerken 10 ist das Medium 14 so ausgestaltet, dass ein und dieselben Daten an alle Endgeräte 16a-16f gleichzeitig gesendet werden können (Rundsendung, Broadcast), wobei die Bandbreite für die Übertragung lediglich einmal für alle Endgeräte 16a-16f und nicht für alle Endgeräte 16a-16f separat erneut benötigt wird.

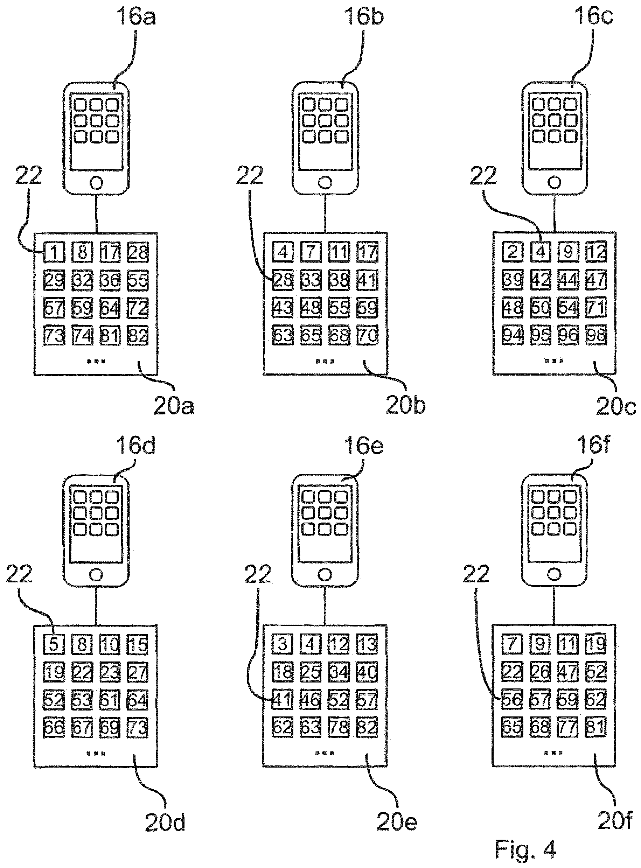

Diesen Umständen trägt die Anwendung der sogenannten Indexkodierung (index coding) Rechnung. Diese kann auf den Endgeräten 16a-16f beispielsweise so umgesetzt werden, wie es in Fig. 4 gezeigt ist. Jedes der Endgeräte 16a-16f weist eine Speichereinrichtung 20a-20f, die auch Cachespeicher genannt wird, auf, in der Datenblöcke 22 ablegbar sind. Jeder der Datenblöcke 22 kann Teil einer größeren Datei, beispielsweise einer Videodatei, oder in sich selbst eine abgeschlossene Datei sein. Jeder der Datenblöcke 22 ist somit ein Element einer Gesamtmenge von Elementen, die in der Datenbereitstellungseinrichtung 18 abgelegt sind. Um die Datenblöcke 22 eindeutig zu identifizieren, ist jedem der Datenblöcke 22 beziehungsweise Elemente eine ganze Zahl als Datenblockkennung c zugeordnet.

In der Speichereinrichtung 20a des Endgeräts 16a sind beispielsweise die Datenblöcke 22 mit den Datenblockkennungen 1, 8, 17, 28 sowie einige weitere abgelegt. In der Speichereinrichtung 20b des Endgeräts 16b sind beispielsweise die Datenblöcke 22 mit den Datenblockkennungen 4, 7, 11, 17 sowie einige weitere abgelegt. Fordert nunmehr das Endgerät 16a den Datenblock 22 mit der Datenblockkennung c=4 und gleichzeitig das Endgerät 16b den Datenblock 22 mit der Datenblockkennung c=1 an, so können diese beiden Datenblöcke 22, beispielsweise in der Datenbereitstellungseinrichtung 18, mathematisch miteinander kombiniert werden, beispielsweise mittels einer exklusiv-oder-Operation (XOR). Der daraus resultierende codierte Datenblock 1+4 ist mit dem Datenblock 22 mit der Datenblocckennung c=4 so kombinierbar, dass daraus der Datenblock 22 mit der Datenblockkennung c=1 erhältlich ist. Des Weiteren ist der Datenblock 1+4 mit dem Datenblock 22 mit der Datenblockkennung c=1 so kombinierbar, dass daraus der Datenblock 22 mit der Datenblocckennung c=4 erhältlich ist.

Der Datenblock 1+4 nimmt durch die Möglichkeit der Rundsendung die Bandbreite des Mediums 14 nur einmal in Anspruch. Dennoch haben sowohl das Endgerät 16a als auch das Endgerät 16b die angeforderten Daten erhalten. In diesem Fall wird die benötigte Bandbreite also um die Hälfte reduziert.

Damit dieses Verfahren anwendbar ist, muss die Datenbereitstellungseinrichtung 18 Informationen darüber erhalten, welche Datenblöcke 22 in welchen Endgeräten 16a-16f abgelegt wurden und welche Kombination von Anforderungen sich zu kombinierten Datenblöcken zusammenfassen lässt. Um diese Informationen effizient übermitteln und verarbeiten zu können, werden bei der Indexcodierung Listen zu Indizes codiert. Beispielsweise kann einer Liste, die als Elemente alle Endgeräte 16a-16f aufweist, die einen Datenblock 22 mit einer bestimmten Datenblockkennung c in ihrer Speichereinrichtung 20a-20f zwischengespeichert haben, ein Index in Form einer Kennung zugeordnet werden. Dieser Kennung ist dadurch auch eindeutig eine Elementliste zugewiesen. Dadurch können beispielsweise Endgeräte 16a-16f zu Gruppen zusammengefasst werden, denen jeweils eine Gruppenkennung i zugeordnet ist. Die Liste beziehungsweise die Kennung kann auch andere Informationen repräsentieren, beispielsweise welche Datenblöcke 22 in der Speichereinrichtung 20a-20f eines bestimmten Endgeräts 16a-16f abgelegt sind.

Die Zuordnung zwischen der Elementliste (subset) und der Kennung (index) kann beispielsweise durch Abzählen nach dem folgenden in Pseudocode beschriebenen Verfahren durchgeführt werden:

```
subset = index_to_subset(index, N, K) {
        count <- 1
        for (i = 1:2^N-1) {
                set <- binary-to-set( number-to-binary(i) )
                if (|set| == K) { count <- count +1 }
                if (count == index) { return set }
        }
}

index = subset_to_index(subset, N, K) {
        count <- 1
        binary-subset <- set-to-binary(subset)
        for (i = 1 :2^N-1) {
                set <- binary-to-set( number-to-binary(i) )
                if (|set| == K) {
                        count <- count +1
                        if ( binary-subset == number-to-binary(i) ) { return i }
                }
        }
}
```

Bei diesem Verfahren zur Zuordnung von Elementlisten zu Kennungen werden im Wesentlichen alle möglichen Zuordnungen ausprobiert, bis die korrekte Zuordnung gefunden wurde. Dies erfordert eine große Rechenleistung.

Alternativ dazu kann die Zuordnung von Elementlisten zu Kennungen im Vorfeld berechnet und dann als vorberechnete Zuordnung abgespeichert werden. Dies benötigt viel Speicherplatz. Bereits bei moderaten Mengen von Endgeräten 16a-16f und Datenblöcken 22 können zur Speicherung dieser vorberechneten Zuordnung über 50GB Daten anfallen. Derartig große Datenstrukturen sind nur schwer in mobilen Endgeräten 16a-16f vorzuhalten.

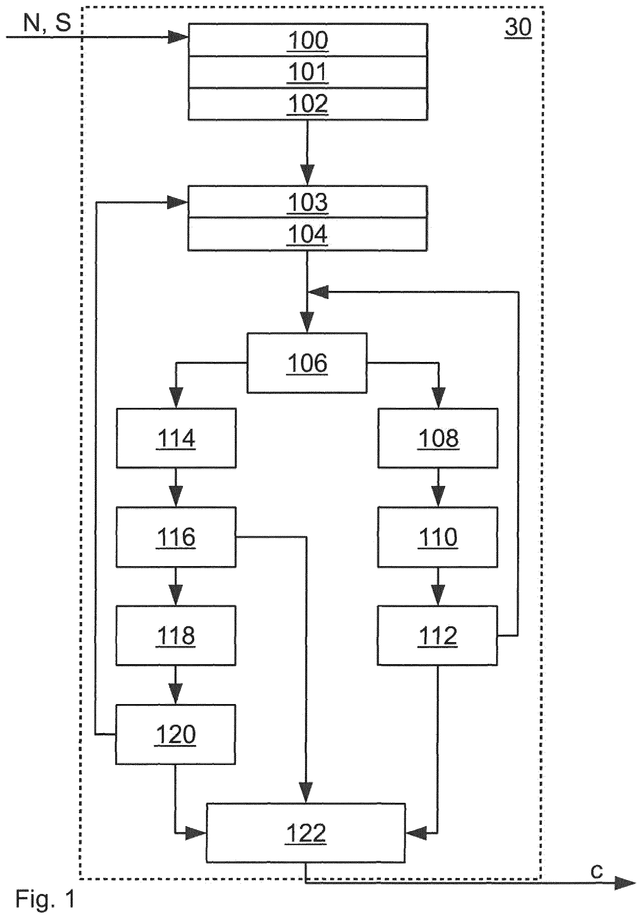

Die in Fig. 1 gezeigte Kennungscodierungseinrichtung 30 ist zur Ausführung eines im Folgenden beschriebenen Verfahrens zur Zuordnung einer Kennung zu einer bekannten Elementliste ausgebildet. Der Kennungscodierungseinrichtung 30 wird eine Elementliste S übergeben. Die Elementliste S enthält eine Mehrzahl von Elementen, wobei jedes Element durch eine ganze Zahl repräsentiert wird. Die Elemente sind einer Elementmenge entnommen, die alle möglichen Elemente, beispielsweise alle Datenblöcke 22, repräsentiert. Diese Elementmenge weist eine vorbestimmte Gesamtzahl N von Elementen auf.

Ausgehend von der Elementliste S wird in einem ersten vorbereitenden Schritt 100 zunächst eine Anzahl der Elemente, die in der Elementliste S enthalten sind, ermittelt. Diese Anzahl wird gewöhnlich Kardinalität genannt. Das Ergebnis wird in einem Kardinalitätszähler k abgelegt. In einem zweiten vorbereitenden Schritt 101 wird die Zahl O in einem Begrenzungszähler b abgelegt. In einem dritten vorbereitenden Schritt 102 wird die Zahl O in einem Zwischenspeicher c abgelegt.

Die vorbereitenden Schritte 100-102 können in jeder beliebigen Reihenfolge ausgeführt werden.

In einem ersten Schritt 103 wird das kleinste Element der Elementliste S ermittelt und in einem Elementzwischenspeicher m abgelegt. Das in dem Elementzwischenspeicher m abgelegte kleinste Element der Elementliste S wird in einem zweiten Schritt 104 aus der Elementliste S entfernt.

In einem dritten Schritt 106 wird der Wert des Elementzwischenspeichers m und des Begrenzungszählers b verglichen. Sind die Werte nicht identisch, so wird mit einem weiter unten beschriebenen achten Schritt 108 fortgefahren.

In einem vierten Schritt 114 wird der Kardinalitätszähler k um 1 verringert. In einem daran anschließenden fünften Schritt 116 wird der Wert des Kardinalitätszählers k mit O verglichen. Ist der Wert des Kardinalitätszählers k gleich 0, so wird mit einem weiter unten beschriebenen Abschlussschritt 122 fortgefahren.

In einem sechsten Schritt 118 wird der Begrenzungszähler b um 1 erhöht.

In einem siebten Schritt 120 wird festgestellt, ob der Begrenzungszähler b der Gesamtzahl N von Elementen entspricht. Ist dies der Fall, so wird mit dem Abschlussschritt 122 fortgefahren. Ist dies nicht der Fall, so wird mit dem ersten Schritt 103 fortgefahren.

In dem achten Schritt 108 wird ein Binomialkoeffizient wie folgt berechnet $\binom{N-b-1}{k-1}$ und zu dem Zwischenspeicher c hinzuaddiert.

In einem neunten Schritt 110 wird der Begrenzungszähler b um 1 erhöht. In einem zehnten Schritt 112 wird der Begrenzungszähler b mit der Gesamtzahl N verglichen. Sind die Werte identisch, so wird mit dem Abschlussschritt 122 fortgefahren. Ansonsten wird mit dem dritten Schritt 106 fortgefahren.

In dem Abschlussschritt 122 wird der Inhalt des Zwischenspeichers c übergeben.

Er stellt die ermittelte Kennung dar und wird von der Kennungszuordnungseinrichtung 30 beispielsweise als der Elementliste S zugeordnete Kennung c ausgegeben. Diese Kennung kann beispielsweise eine globale und/oder lokale Datenblockkennung c sein, die einen Datenblock 22 beschreibt, der in den in der Elementliste S enthaltenen Endgeräten 16a-16f zwischengespeichert ist.

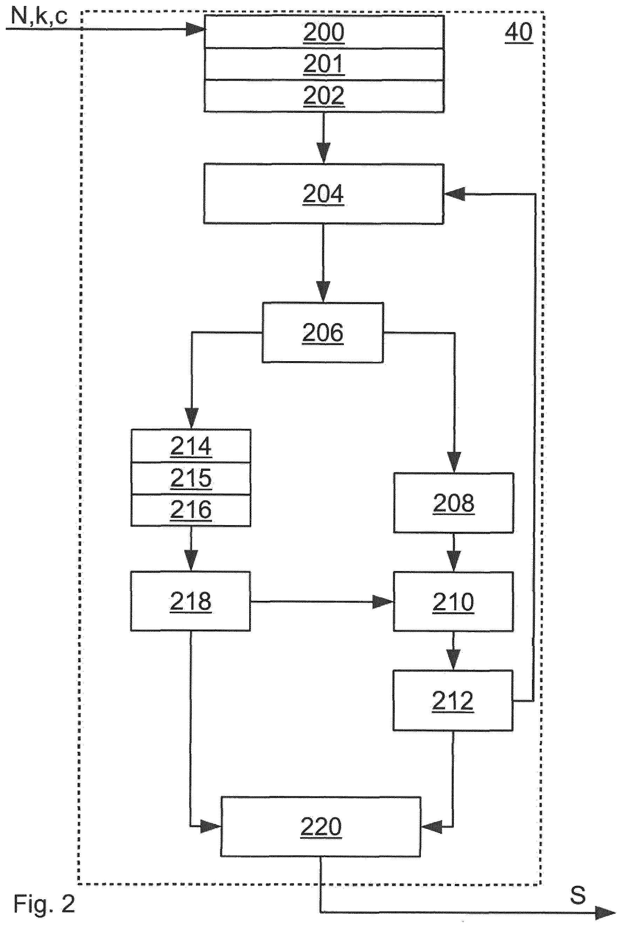

Die in Fig. 2 gezeigte Kennungsdecodierungseinrichtung 40 ist zur Ausführung eines im Folgenden beschriebenen Verfahrens zur Zuordnung einer Elementliste S zu einer bekannten Kennung ausgebildet. Der Kennungsdecodierungseinrichtung 40 wird eine Kennung (beispielsweise eine Datenblockkennung c) in Form einer ganzen Zahl übergeben und in einem Kennungszwischenspeicher c abgelegt. Die zu ermittelnde Elementliste S soll eine vorbestimmte Kardinalität aufweisen, die in einem Kardinalitätszähler k abgelegt ist. Darüber hinaus weist eine Elementmenge, aus der die Elemente der Elementliste S ausgewählt werden sollen, eine vorbestimmte Gesamtzahl N von Elementen auf.

In einem ersten vorbereitenden Schritt 200 wird die Zahl 0 in einem Begrenzungszähler b und in einem zweiten vorbereitenden Schritt 201 in einem Elementzähler m abgelegt. In einem dritten vorbereitenden Schritt 202 wird eine zunächst leere Liste als Elementliste S abgelegt.

Die vorbereitenden Schritte 200-202 können in jeder beliebigen Reihenfolge durchgeführt werden.

In einem ersten Schritt 204 wird ein Binomialkoeffizient $\binom{N-b-1}{k-1}$ berechnet und in einem Zwischenspeicher z abgelegt.

In einem zweiten Schritt 206 werden der Wert des Kennungszwischenspeichers c und des Zwischenspeichers z miteinander verglichen. Sofern der Kennungszwischenspeicher c einen Wert aufweist, der größer oder gleich dem Wert des Zwischenspeichers z ist, wird mit einem weiter unten beschriebenen sechsten Schritt 214 fortgefahren.

In einem dritten Schritt 208 wird der Wert des Kennungszwischenspeichers c um den Wert des Zwischenspeichers z verringert beziehungsweise reduziert.

In einem vierten Schritt 210 wird der Begrenzungszähler b um 1 erhöht.

In einem fünften Schritt 212 wird der Wert des Begrenzungszählers b mit der Gesamtzahl N verglichen. Sofern die Werte gleich sind, wird mit dem ersten Schritt 204 fortgefahren, ansonsten wird mit einem Abschlussschritt 220 fortgefahren.

In dem Abschlussschritt 220 wird die Elementliste S von der Kennungsdecodierungseinrichtung 40 als Ergebnis ausgegeben.

In dem sechsten Schritt 214 wird der Wert des Elementzählers m zu der Elementliste S hinzugefügt.

In einem siebten Schritt 215 wird der Elementzähler m um 1 erhöht.

In einem achten Schritt 216 wird der Kardinalitätszähler k um 1 verringert.

In einem neunten Schritt 218 wird der Wert des Kardinalitätszählers k mit 0 verglichen und mit dem Abschlussschritt 220 fortgefahren, wenn dies der Fall ist. Ansonsten wird mit dem vierten Schritt 210 fortgefahren.

Das Ausgeben als Ergebnis in den Schritten 122, 220 kann beispielsweise durch Übergabe an eine weiterverarbeitende Einrichtung oder durch Ablage in einem Speicherbereich erfolgen.

Die beiden Verfahren 100-122, 200-220 sind insofern komplementär, als sie jeweils die Umkehrung voneinander darstellen.

Die Verfahren 100-122, 200-220 können beispielsweise in Anweisungen an eine Rechenmaschine, beispielsweise Programmcode, umgesetzt werden, die eine Rechenmaschine dazu veranlassen, die Verfahren 100-122, 200-220 auszuführen. Die Verfahren 100-122, 200-220 werden nicht notwendigerweise in ein und derselben Einrichtung ausgeführt. Beispielsweise kann das erste Verfahren 100-122 in einer Kennungscodierungseinrichtung 30 eines Endgeräts 16a-16f ausgeführt werden, oder beispielsweise das zweite Verfahren 200-220 in einer Kennungsdecodierungseinrichtung 40 der Datenbereitstellungseinrichtung 18 ausgeführt werden oder umgekehrt. Es ist ebenso denkbar, dass die Verfahren 100-122, 200-220 zur Zuordnung unterschiedlicher Aspekte einer Verteilung von Datenblöcken 22 in verschiedenen Einrichtungen des Netzwerks 10 ausgeführt werden.

Das vorliegend gezeigte Netzwerk 10 weist lediglich eine einzige Datenbereitstellungseinrichtung 18 sowie sechs Endgeräte 16a-16f auf. Die Verfahren 100-122, 200-220 und somit auch die Kennungscodierungseinrichtung 30 und die Kennungsdecodierungseinrichtung 40 sind nicht auf diese Anzahlen beschränkt. Es ist vielmehr möglich, eine beliebige Anzahl von Datenbereitstellungseinrichtungen 18 sowie eine beliebige Anzahl von Endgeräten 16a-16f in dem Netzwerk 10 vorzuhalten. Das Netzwerk 10 bildet ein Datenverteilungssystem.

In dem Netzwerk 10 kann jeder Benutzer beziehungsweise jedes Endgerät 16a-16f bestimmte Abschnitte (Datenblöcke) von Dateien zur Auslieferung von der Datenbereitstellungseinrichtung 18 anfordern. Die Datenbereitstellungseinrichtung 18 kann beispielsweise eine Datenbibliothek mit einer Vielzahl von großen Dateien, beispielsweise eine Video- oder Audiobibliothek, aufweisen. Jede der Dateien ist in Datenblöcke (Chunks) 22 unterteilt, denen jeweils eine Datenblockkennung (chunk id) c zugewiesen ist. Jeder der Datenblöcke 22 kann von jedem Endgerät 16a-16f angefordert werden. Jedes Endgerät 16a-16f kann in seinem Cachespeicher 20a-20f einige oder alle Datenblöcke 22 einiger Video-, Audio- oder Datendateien lokal vorhalten. Das bedeutet, dass diese Datenblöcke 22 beispielsweise zu einem vorbestimmten Zeitpunkt vorsorglich an das Endgerät 16a-16f übermittelt werden, da erwartet wird, dass sie zu einem späteren Zeitpunkt benötigt werden.

Zur Auswahl der von jedem Endgerät 16a-16f in seinem Cachespeicher 20a-20f vorzuhaltenden Datenblöcke 22 kann beispielsweise die Datenbereitstellungseinrichtung 18 eine Auswahleinrichtung aufweisen, welche die Datenblöcke 22 aus der Gesamtmenge verfügbarer Datenblöcke 22 auswählt. Diese Auswahl kann beispielsweise mittels eines Auswahlverfahrens durchgeführt werden.

Das Auswahlverfahren kann beispielsweise einen Verfahrensschritt aufweisen, in dem ein zufälliger Datenblock 22 ausgewählt wird. In einem weiteren Schritt kann dem Endgerät 16a-16f die Information übermittelt werden, diesen Datenblock 22 bei Übermittlung in den Cachespeicher 20a-20f aufzunehmen. Diese Schritte werden wiederholt, bis der Cachespeicher 20a-20f jedes Endgeräts gefüllt ist oder eine vorbestimmte Anzahl Datenblöcke 22 aufweist.

Sofern die Auswahl mittels eines derartigen Verfahrens durchgeführt wird, kann es nützlich sein, in der Datenbereitstellungseinrichtung 18 eine Liste vorzuhalten, in der abgespeichert ist, welches Endgerät 16a-16f in seinem Cachespeicher 20a-20f welche Datenblöcke 22 zwischenspeichert. Dadurch kann vermieden werden, dass die Liste der jeweils vorgehaltenen Datenblöcke 22 bei jedem Übertragungsvorgang erneut von dem Endgerät 16a-16f angefordert werden muss.

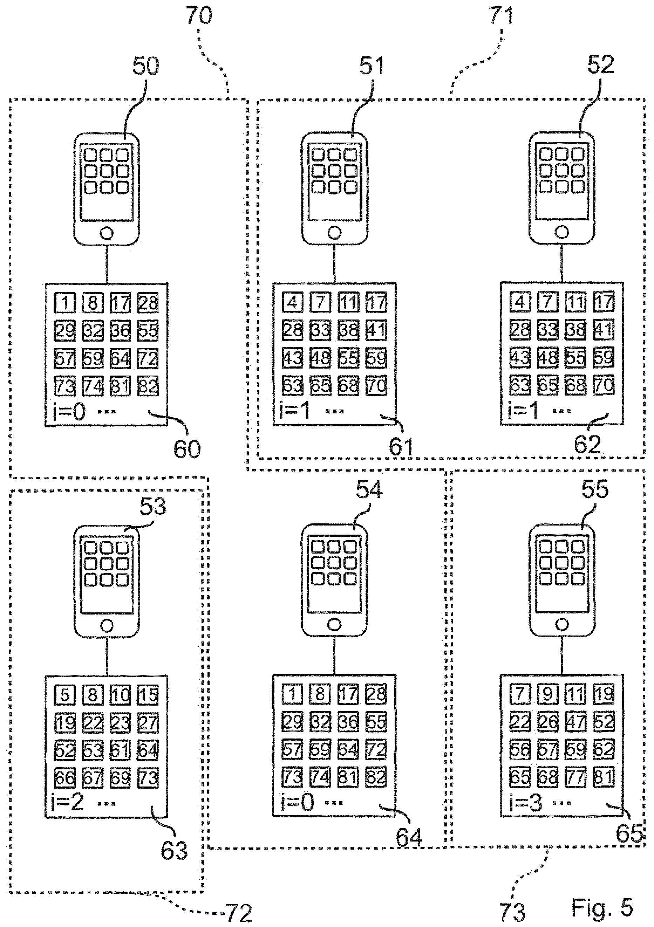

Ein weiteres Auswahlverfahren (siehe Fig. 5) kann darin bestehen, zunächst eine Mehrzahl von Endgeräten 50-55 mit Cachespeichern 60-65, die ähnlich oder genauso aufgebaut sind, wie die Endgeräte 16a-16f mit den Cachespeichern 20a-20f, zu einer Gruppe 70-73 zusammenzufassen, wobei jeder der Gruppen 70-73 eine Gruppenkennung (user id) i zugewiesen ist. Alle Endgeräte 50-55, die Mitglieder derselben Gruppe 70-73 sind, weisen in ihrem Cachespeicher 60-65 dieselben Datenblöcke 22 auf. Somit ist für jedes Endgerät 50-55 nicht mehr der komplette Zustand des Cachespeichers 60-65 von der Datenbereitstellungseinrichtung 18 zu speichern, sondern lediglich die Zuordnung des jeweiligen Endgeräts 50-55 zu einer der Gruppen 70-73.

Die Anzahl der zu bildenden Gruppen 70-73 ist ein Systemparameter N des Datenverteilungssystems. Die Gruppenkennungen oder auch Nutzeridentifikatoren i sind ganze Zahlen, so dass $i \in \{0, \dots, N - 1\}$. Jede dieser Gruppenkennungen definiert eine Gruppe 70-73 von Endgeräten 50-55 in einem bestimmten Cachezustand, das heißt eine Gruppe von Endgeräten 50-55 mit einer bestimmten Menge von in dem Cachespeicher 60-65 vorzuhaltenden Datenblöcken 22, wobei jeder Datenblock 22 beispielsweise durch einen Dateiidentifikator $f \in \{0, \dots, F - 1\}$ und/oder eine Datenblockkennung $c \in \{0, \dots, C - 1\}$ eindeutig identifizierbar ist.

Ein wählbarer Systemparameter $k \in \{1, 2, \dots\}$ beeinflusst, in wie vielen Gruppen 70-73 jedes Dateifragment 22 in dem Cachespeicher 60-65 vorgehalten wird.

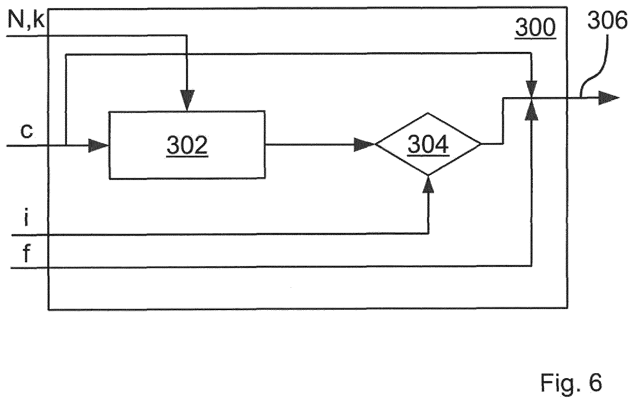

Zur Auswahl der in dem Cachespeicher 60-65 abzulegenden Datenblöcke 22 kann eine Cachezuordnungseinrichtung 300, wie sie in Fig. 6 gezeigt ist, vorgesehen sein. Die Cachezuordnungseinrichtung 300 erhält als Eingabeparameter die Systemparameter N und k, sowie eine Gruppenkennung i und eine Datenblockkennung c.

Die Cachezuordnungseinrichtung 300 weist eine Kennungsdecodierungseinrichtung 302 auf, die zur Durchführung des oben beschriebenen Verfahrens 200-220 zur Zuordnung einer Elementliste zu einer Kennung ausgebildet ist. Die Kennungsdecodierungseinrichtung 302 verarbeitet die Eingabeparameter N, k und c zu einer Liste S von Gruppenkennungen von Gruppen 70-73, in denen der Datenblock 22 mit der Datenblockkennung c vorgehalten werden soll.

Die Liste S wird an eine Entscheidungseinrichtung 304 übergeben, die prüft, ob die Gruppenkennung i, die als Eingabeparameter an die Cachezuordnungseinrichtung 300 übergeben wurde, in der Liste S enthalten ist. Stellt die Entscheidungseinrichtung 304 fest, dass die Gruppenkennung i in der Liste S enthalten ist, so erzeugt sie ein Ausgangssignal 306, das aussagt, dass der Datenblock 22 mit der Datenblockkennung c von den Endgeräten 50-55 der Gruppe mit der Gruppenkennung i gespeichert wird oder werden soll (Zwischenspeichersignal). Stellt die Entscheidungseinrichtung 304 hingegen fest, dass die Gruppenkennung i nicht in der Liste S enthalten ist, so erzeugt sie ein Signal, das das Gegenteil aussagt (Nichtspeichersignal, Datenblock 22 wird nicht gespeichert).

Die Cachezuordnungseinrichtung 300 kann Teil der Datenbereitstellungseinrichtung 18 oder des Endgeräts 50-55 sein. In der Bereitstellungseinrichtung 18 dient die Cachezuordnungseinrichtung 300 beispielsweise dazu, festzustellen, ob ein bestimmter Datenblock 22 an ein bestimmtes Endgerät 50-55 überhaupt übertragen werden muss oder bereits in diesem Endgerät 50-55 vorgehalten wird. In einem Endgerät 50-55 kann die Cachezuordnungseinrichtung 300 beispielsweise dazu dienen, zu bestimmen, ob ein empfangener Datenblock 22 in den Cachespeicher 60-65 aufgenommen werden soll oder nicht.

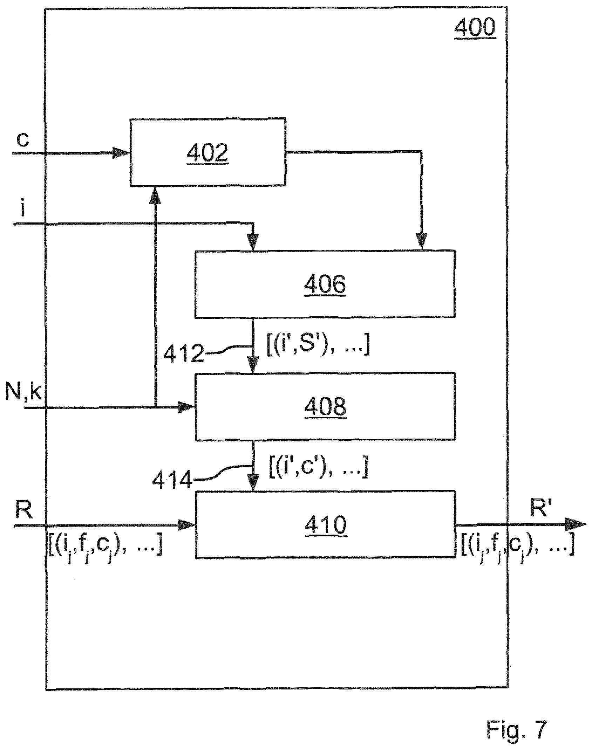

Die Auswahl der aufgrund von Anforderungen der Endgeräte 50-55 gemeinsam codierbaren Datenblöcke 22 wird mittels einer Gruppencodierungseinrichtung 400 durchgeführt, die in Fig. 7 gezeigt ist. Die Gruppencodierungseinrichtung 400 weist eine Kennungsdecodierungseinrichtung 402, eine Kandidatenermittlungseinrichtung 406, eine Kennungscodierungseinrichtung 408 sowie eine Anforderungsauswahleinrichtung 410 auf.

Zunächst werden durch die Datenbereitstellungseinrichtung 18 verschiedene Anforderungen, die von Endgeräten 50-55 gesendet wurden, gesammelt. Eine Anforderung umfasst beispielsweise die Gruppenkennung i des anfordernden Endgeräts 50-55 sowie die Datenblockkennung c des angeforderten Datenblocks 22.

Zusätzlich kann eine Anforderung auch die Dateikennung f der angeforderten Datei umfassen. Die Anforderungen können beispielsweise in einer Liste R abgelegt werden. Eine der Anforderungen wird ausgewählt und aus deren Datenblockkennung c mittels der Kennungsdecodierungseinrichtung 402 eine Liste S der Gruppen 70-73 mit Gruppenkennungen i erstellt, in deren zugehörigen Cachespeichern 60-65 der Datenblock 22 mit der Datenblockkennung c vorgehalten wird.

Die Liste S wird der Kandidatenermittlungseinrichtung 406 übergeben. Für jeden Eintrag i' in der Liste S ermittelt die Kandidatenermittlungseinrichtung 406 eine Liste von Tupeln (i', S'), wobei S' dadurch erhalten wird, dass die Gruppenkennung i' aus S entfernt und stattdessen die Gruppenkennung i der ausgewählten Anforderung zu S hinzugefügt wird.

Mittels der Kennungscodierungseinrichtung 408 wird in jedem der so ermittelten Tupel die Liste S' durch eine von der Kennungscodierungseinrichtung 408 ermittelte Datenblockkennung c' ersetzt, so dass eine Liste von Tupeln (i', c') entsteht, die wiederum der Anforderungsauswahleinrichtung 410 übergeben wird.

Die Anforderungsauswahleinrichtung 410 wählt daraufhin für jedes der Tupel (i', c') höchstens eine Anforderung aus den Anforderungen R aus, deren Gruppenkennung i=i' und deren Datenblockkennung c=c' und legt diese Anforderungen in einer Liste R' ab. Die derart ausgewählten Anforderungen R' können zur gemeinsamen Übertragung codiert werden.

Nachdem die Gruppencodierungseinrichtung 400 eine Liste gemeinsam codierbarer Datenblöcke 22 erstellt hat, werden die entsprechenden Datenblöcke 22 zusammen in einen codierten Datenblock codiert (nicht gezeigt). Zur Übertragung des gemeinsam codierten Datenblocks wird dieser beispielsweise durch Kopfdaten ergänzt, die angeben, welche Datenblöcke 22 in dem codierten Datenblock gemeinsam codiert sind. Diese Information ist notwendig, damit die Endgeräte 50-55 aus ihren Cachespeichern 60-65 die Datenblöcke 22 auswählen können, mit denen der gemeinsam codierte Datenblock decodiert und die darin enthaltenen Daten nutzbar gemacht werden können.

Zu diesem Zweck ist eine Koordinierungseinrichtung oder Kommunikationseinrichtung 500 vorgesehen. Eine einfache Kommunikationseinrichtung 500 könnte beispielsweise zu jedem gemeinsam codierten Datenblock eine Liste der Datenblockkennungen c der gemeinsam codierten Datenblöcke 22 hinzufügen. Insbesondere bei codierten Datenblöcken, in denen viele Datenblöcke 22 gemeinsam codiert sind, kann eine derartige Liste allerdings unverhältnismäßig groß werden, so dass zusätzlich zu den Nutzdaten viele Kopfdaten übertragen werden müssen.

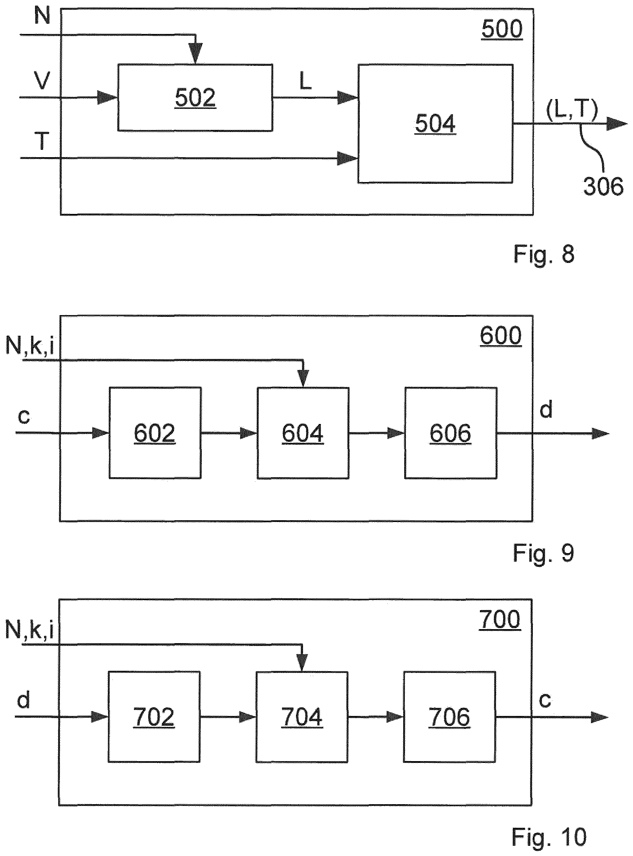

Aufgrund der Eigenschaften der in der Cachezuordnungseinrichtung 300 verwendeten Kennungsdecodierungseinrichtung 302 kann eine Kommunikationseinrichtung 500, wie sie in Fig. 8 gezeigt ist, die Menge der zu übertragenden Kopfdaten reduzieren. Die Kommunikationseinrichtung 500 weist eine Kennungscodierungseinrichtung 502 auf, die wie die Kennungscodierungseinrichtung 30 aufgebaut ist.

Der Kommunikationseinrichtung 500 wird neben dem Systemparameter N eine Liste V der Gruppenkennungen i übergeben, in deren Cachespeichern die in dem gemeinsam codierten Datenblock enthaltenen Datenblöcke 22 vorgehalten werden. Darüber hinaus wird der Kommunikationseinrichtung 500 eine Liste T mit Dateikennungen f übergeben, welche die Dateien repräsentieren, deren Inhalt jeweils teilweise für die gemeinsame Codierung verwendet wurde. Die Listen V und T haben jeweils eine Länge von k+1. Die Kennungscodierungseinrichtung 502 verarbeitet die Liste V sowie die Parameter N und k+1 zu einem Index L.

Der Index L wird zusammen mit der Liste T an eine Kopfdatenerzeugungseinrichtung 504 übergeben und die von dieser erzeugten Kopfdaten 506 beispielsweise zu dem gemeinsam codierten Datenblock hinzugefügt. Ein Endgerät kann durch Umkehren des Vorgangs mittels einer Kennungsdecodierungseinrichtung die Liste V zurückerhalten und dadurch die Datenblockkennungen c der Datenblöcke bestimmen, welche in den gemeinsam codierten Datenblock eingeflossen sind.

In der Liste T der Dateikennungen f können beispielsweise bestimmte Werte für die Dateikennung f bedeuten, das von dieser Datei kein Datenblock 22 mit in den gemeinsam codierten Datenblock eingeflossen ist. Dies ist insbesondere nützlich, um zu kennzeichnen, welche Datenblöcke 22 nicht gemeinsam codierbar waren.

Der Cachespeicher 60-65 enthält Datenblöcke 22, die jeweils aufgrund der Zugehörigkeit des Endgeräts 50-55 zu einer Gruppe 70-73 mit gesamten Datenbibliothek ausgewählt sind. Um die in dem Cachespeicher 60-65 gespeicherten Datenblöcke 22 anhand der systemweit vergebenen Datenblockkennung c identifizieren zu können, könnte mit den Datenblöcken 22 zusammen jeweils die Datenblockkennung c abgespeichert werden.

Um Platz zu sparen, können die Datenblöcke 22, die beispielsweise eine feste Länge beziehungsweise Abschnittsgröße G aufweisen, in dem Cachespeicher 60-65 auch linear aufeinanderfolgend abgespeichert werden. Der Speicherort kann in einem linearen Speichermedium beispielsweise aus der Datenblockkennung c mittels der Formel G*c ermittelt werden. Da jedoch lediglich ein Teil der Datenblöcke 22 in dem Cachespeicher 60-65 abgelegt wird, ergeben sich aus einer derartigen Zuordnung große ungenutzte Speicherbereiche innerhalb des Cachespeichers 60-65.

Daher kann es bevorzugt sein, den systemweiten Datenblockkennungen c lokale Datenblockkennungen d zuzuweisen, die eine kompakte Anordnung oder Speicherung der Datenblöcke 22 in dem Cachespeicher 60-65 erlauben. Zu diesem Zweck kann beispielsweise ein Endgerät 50-55 eine Datenblockkennungszuordnungseinrichtung 600 aufweisen, die als Eingabeparameter die Systemparameter N und k, sowie die Gruppenkennung i erhält.

Die Datenblockkennungszuordnungseinrichtung 600 weist eine Kennungsdecodierungseinrichtung 602, eine Abbildungseinrichtung 604 und eine Kennungscodierungseinrichtung 606 auf.

Die Kennungsdecodierungseinrichtung 602 wendet das Verfahren 200-220 zur Zuweisung einer Elementliste zu einer Kennung an, um aus den Parametern N, k und c eine Liste der Gruppenkennungen i zu erzeugen, in denen die Datenblöcke 22 mit der Datenblockkennung c vorgehalten werden.

In einer ersten Ausführungsform übernimmt die Abbildungseinrichtung 604 diese Liste und führt die folgenden Schritte aus: Entfernen der eigenen Gruppenkennung i aus der Liste; Verringern aller Gruppenkennungen um 1, soweit sie dem Betrag nach größer sind als die eigene Gruppenkennung i. Die daraus entstandene Liste weist ein Element weniger auf als die von der Kennungscodierungseinrichtung 602 erzeugte Liste.

Die von der Abbildungseinrichtung 604 erzeugte Liste wird der Kennungscodierungseinrichtung 606 übergeben, die unter Einbeziehung der Systemparameter N-1 und k-1 die lokale Datenblockkennung d erzeugt.

In einer zweiten Ausführungsform übernimmt die Abbildungseinrichtung 604 die Liste und führt die folgenden Schritte aus: Prüfen, ob die Gruppenkennung 0 in der Liste enthalten ist; prüfen, ob die eigene Gruppenkennung i in der Liste enthalten ist; wenn die Gruppenkennung 0 in der Liste enthalten war, Entfernen der Gruppenkennung 0 und Hinzufügen der eigenen Gruppenkennung i; wenn die eigene Gruppenkennung i enthalten war, Entfernen der Gruppenkennung i und Hinzufügen der Gruppenkennung 0; wenn sowohl die Gruppenkennung 0 als auch die Gruppenkennung i enthalten waren, oder weder die Gruppenkennung 0 noch die Gruppenkennung i enthalten waren, keine Änderung.

Die derart erhaltene Liste wird der Kennungscodierungseinrichtung 606 übergeben, die unter Einbeziehung der Systemparameter N und k die lokale Datenblockkennung d erzeugt, beispielsweise durch Anwendung der Verfahrensschritte 100-122.

Die zweite Ausführungsform der Datenblockkennungszuordnungseinrichtung 600 erlaubt es, auch Datenblöcken 22 eine lokale Datenblockkennung d zuzuordnen, die nicht der Gruppenkennung i zugeordnet sind. Die lokalen Datenblockkennungen d der Datenblöcke 22, die der Gruppenkennung i zugeordnet sind, sind durch dieses Verfahren immer niedriger als die lokalen Datenblockkennungen d der Datenblöcke 22, die der Gruppenkennung i nicht zugeordnet sind. Somit ist es möglich, nicht der Gruppenkennung i zugehörige Datenblöcke 22 zu speichern, die der Gruppenkennung i zugehörigen Datenblöcke 22 werden aber weiterhin kompakt am Anfang des Cachespeichers 60-65 abgelegt.

In einer dritten Ausführungsform der Datenblockkennungszuordnungseinrichtung 600 übernimmt die Abbildungseinrichtung 604 die Liste und führt die folgenden Schritte aus: Prüfen, ob die eigene Gruppenkennung i in der Liste enthalten ist; wenn die eigene Gruppenkennung i nicht enthalten war, Erhöhen aller in der Liste enthaltenen Gruppenkennungen um 1, soweit sie dem Betrag nach kleiner sind als die eigene Gruppenkennung i; wenn die eigene Gruppenkennung i enthalten war, Entfernen der Gruppenkennung i, Erhöhen aller in der Liste enthaltenen Gruppenkennungen um 1, soweit sie dem Betrag nach kleiner sind als die eigene Gruppenkennung i und Hinzufügen der Gruppenkennung 0.

Die derart erhaltene Liste wird der Kennungscodierungseinrichtung 606 übergeben, die unter Einbeziehung der Systemparameter N und k die lokale Datenblockkennung d erzeugt, beispielsweise durch Anwendung der Verfahrensschritte 100-122.

Die dritte Ausführungsform der Datenblockkennungszuordnungseinrichtung 600 bewirkt wie die zweite Ausführungsform, dass die Datenblöcke 22, die der Gruppenkennung i zugeordnet sind, kompakt am Anfang des Cachespeichers 60-65 abgelegt werden. Die darauffolgenden Datenblöcke 22 werden darüber hinaus in der Reihenfolge ihrer Datenblockkennungen c abgelegt. Somit wird die Lokalität bei Zugriffen auf nicht der Gruppenkennung i zugehörige Datenblöcke 22, die trotzdem vorgehalten werden, verbessert.

Jedes Endgerät 16a-16f, 50-55 kann mittels empfangener Codesymbole (gemeinsam codierte Datenblöcke) und den in dem Cachespeicher 20a-20f, 60-65 vorgehaltenen Datenblöcken 22 die der Gruppe i zugewiesenen Dateien decodieren. Die in dem Cachespeicher 20a-20f, 60-65 vorgehaltenen Datenblöcke 22 entsprechen dabei einer Untermenge der existierenden Codesymbole. Lese- und Schreibzugriffe werden mittels einer Dateisystemeinrichtung 600 durchgeführt.

Um aus einer lokalen Datenblockkennung d die zugehörige systemweite Datenblockkennung c zu erhalten, kann eine weitere Datenblockkennungszuordnungseinrichtung 700 vorgesehen sein, wie sie in Fig. 10 gezeigt ist. Die Datenblockkennungszuordnungseinrichtung 700 weist eine Kennungsdecodierungseinrichtung 702, eine Abbildungseinrichtung 704 und eine Kennungscodierungseinrichtung 706 auf. Im Wesentlichen entspricht dieser Aufbau dem der Datenblockkennungszuordnungseinrichtung 600. Lediglich die Abbildungseinrichtung 704 wandelt die Listen mit gegenüber der Abbildungseinrichtung 604 umgekehrten Operationen um.

Die hierin beschriebenen Verfahren 100-122, 200-218 sowie die hierin beschriebenen Netzwerke 10 stellen eine effiziente Umsetzung der Indexkodierung dar, die weder besonders Rechen intensiv noch besonders speicherintensiv ist. Dadurch sind die Verfahren 100-122, 200-218 sowie die Netzwerke 10 besonders gut zur Umsetzung in Verbindung mit Mobilfunknetzen geeignet.

**Bezugszeichenliste**

| | |
|---|---|
| 10 | Mobilfunknetzwerk |
| 12 | Basisstation |
| 14 | Medium |
| 16a-16f | Endgerät |
| 18 | Datenbereitstellungseinrichtung |
| 20a-20f | Speichereinrichtung / Cachespeicher |
| 22 | Datenelement / Element / Datenblock |
| 30 | Kennungscodierungseinrichtung |
| 40 | Kennungsdecodierungseinrichtung |
| 50-55 | Endgerät |
| 60-65 | Speichereinrichtung / Cachespeicher |
| 70-73 | Gruppe |
| 100-122 | Verfahrensschritte |
| 200-220 | Verfahrensschritte |
| 300 | Cachezuordnungseinrichtung (Cache Placement Module) |
| 302 | Kennungsdecodierungseinrichtung |
| 304 | Entscheidungseinrichtung |
| 400 | Gruppencodierungseinrichtung (Group Coder Module) |
| 402 | Kennungscodierungseinrichtung |
| 406 | Kandidatenermittlungseinrichtung |
| 408 | Kennungsdecodierungseinrichtung |
| 410 | Anforderungsauswahleinrichtung |
| 500 | Koordinierungseinrichtung (Coordination Module) |
| 502 | Kennungsdecodierungseinrichtung |
| 504 | Kopfdatenerzeugungseinrichtung |
| 506 | Kopfdaten |
| 600, 700 | Datenblockkennungszuweisungseinrichtung / Dateisystemeinrichtung (File System Module) |
| 602, 702 | Kennungsdecodierungseinrichtung |
| 604, 704 | Abbildungseinrichtung |
| 606,706 | Kennungscodierungseinrichtung |
| b | Begrenzungszähler |
| c | Datenblockkennung (systemweit), Zwischenspeicher der Kennungscodierungseinrichtung und der Kennungsdecodierungseinrichtung |
| d | Datenblockkennung (lokal) |
| f | Dateikennung |
| G | Systemparameter / Länge eines Datenblocks |
| i | Nutzerkennung, Gruppenkennung (user id) |
| N | Systemparameter/ Anzahl der Gruppen oder Gruppenkennungen |
| k | Systemparameter/ Kardinalität |
| L | Index |
| R | Liste wartender Anforderungen |
| R' | Liste ausgewählter Anforderungen |
| S | Kennungsliste / Elementliste |
| z | Zwischenspeicher |

**Patentansprüche**

1. Kennungscodierungseinrichtung (30), die zum Kodieren einer Elementliste, S, von Identifikatoren zu einer Kennung bei der Verteilung einer Datenmenge von einem Server (18) an ein Netzwerk (10) ausgebildet ist, wobei die Datenmenge eine Mehrzahl von Datenblöcke (22) umfasst, wobei das Netzwerk (10) eine Mehrzahl von Endgeräten (16a-16f, 50-55) umfasst, wobei jedes Endgerät (16a-16f, 50-55) einen Cachespeicher (20a-20f, 60-65) zum Zwischenspeichern von Datenblöcken (22) der Datenmenge aufweist, wobei ein Cachezustand einen Zustand einer Menge von Datenblöcken (22) in einem Cachespeicher (20a-20f, 60-65) beschreibt, wobei

- entweder ein Identifikator einen Dateiidentifikator zum eindeutigen Identifizieren eines Datenblocks (22) der Datenmenge aufweist, wobei die Kennung den Cachezustand eines der Mehrzahl von Endgeräten (16a-16f, 50-55) beschreibt,
- oder ein Identifikator einen Nutzeridentifikator zum eindeutigen Identifizieren eines Endgerätes (16a-16f, 50-55) oder einer Gruppe (70-73) von Endgeräten (50-55) in dem Netzwerk (10) aufweist, wobei die Kennung ein Endgerät (16a-16f, 50-55) oder eine Gruppe (70-73) von Endgeräten (50-55) mit einem bestimmten Cachezustand beschreibt,

wobei ein Identifikator ein Element einer Elementmenge darstellt, wobei die Elementmenge die Menge aller Identifikatoren in dem Netzwerk (10) repräsentiert, wobei die Kennungscodierungseinrichtung zur eindeutigen Zuordnung der Kennung zu der Elementliste, S, ausgebildet ist, wobei die Elementliste, S, eine Mehrzahl von aus der Elementmenge ausgewählten Elementen aufweist, wobei die Elementmenge eine vorbestimmte Gesamtzahl, N, von Elementen aufweist, wobei jedes Element durch eine ganze Zahl $i \in \{0, ... , N - 1\}$ eindeutig repräsentiert ist, wobei die Kennungscodierungseinrichtung zur Durchführung der folgenden Schritte konfiguriert ist:

a) Abzählen (100) der Anzahl, k, der Elemente der Elementliste, S, und Ablegen der Anzahl, k, in einem Kardinalitätszähler;
b) Ablegen (101) der Zahl 0 als Wert, b, in einem Begrenzungszähler;
c) Ablegen (102) der Zahl 0 als Wert, c, in einem Zwischenspeicher;
d) Ablegen (103) des kleinsten Elements der Elementliste, S, als Wert, m, in einem Elementzwischenspeicher;
e) Entfernen (104) des kleinsten Elements aus der Elementliste, S;
f) Vergleichen (106) des Wertes, m, des Elementzwischenspeichers und des Wertes, b, des Begrenzungszählers sowie Fortfahren mit Schritt g), wenn die Werte identisch sind, sonst Fortfahren mit Schritt k);
g) Verringern (114) des Wertes, k, des Kardinalitätszählers um 1;
h) Vergleichen (116) des Wertes, k, des Kardinalitätszählers mit 0 und Fortfahren mit Schritt n), sofern der Wert, k, des Kardinalitätszählers gleich 0 ist, sonst Fortfahren mit Schritt i);
i) Erhöhen (118) des Wertes, b, des Begrenzungszählers um 1;
j) Feststellen (120), ob der Wert, b, des Begrenzungszählers der Gesamtzahl, N, von Elementen entspricht, falls ja, Fortfahren mit Schritt n), sonst Fortfahren mit Schritt d);
k) Berechnen (108) des Binomialkoeffizienten $\binom{N - b - 1}{k - 1}$ und Addieren des Ergebnisses zu dem Wert, c, des Zwischenspeichers;
l) Erhöhen (110) des Wertes, b, des Begrenzungszählers um 1;
m) Vergleichen (112) des Wertes, b, des Begrenzungszählers mit der Gesamtzahl, N, von Elementen und Fortfahren mit Schritt n), falls die Werte identisch sind, sonst Fortfahren mit Schritt f);
n) Übergeben (122) des Inhalts, c, des Zwischenspeichers als Kennung.

2. Kennungsdecodierungseinrichtung (40), die zum Dekodieren einer Kennung, c, zu einer Elementliste, S, von Identifikatoren bei der Verteilung einer Datenmenge von einem Server (18) an ein Netzwerk (10) ausgebildet ist, wobei die Datenmenge eine Mehrzahl von Datenblöcke (22) umfasst, wobei das Netzwerk (10) eine Mehrzahl von Endgeräten (16a-16f, 50-55) umfasst, wobei jedes Endgerät (16a-16f, 50-55) einen Cachespeicher (20a-20f, 60-65) zum Zwischenspeichern von Datenblöcken (22) aufweist, wobei ein Cachezustand einen Zustand einer Menge von Datenblöcken (22) in einem Cachespeicher (20a-20f, 60-65) beschreibt, wobei

- entweder ein Identifikator einen Dateiidentifikator zum eindeutigen Identifizieren eines Datenblocks (22) der Datenmenge aufweist, wobei die Kennung den Cachezustand eines der Mehrzahl von Endgeräten (16a, 16f, 50-55) beschreibt,
- oder ein Identifikator einen Nutzeridentifikator zum eindeutigen Identifizieren eines Endgeräts (16a-16f, 50-55) oder einer Gruppe (70-73) von Endgeräten (50-55) in dem Netzwerk aufweist, wobei die Kennung ein Endgerät (16a-16f, 50-55) oder eine Gruppe (70-73) von Endgeräten (50-55) mit einem bestimmten Cachezustand beschreibt,

wobei ein Identifikator ein Element einer Elementmenge darstellt, wobei die Elementmenge die Menge aller Identifikatoren in dem Netzwerk (10) repräsentiert, wobei die Kennungscodierungseinrichtung zur Zuordnung der Elementliste, S, zu der Kennung, c, ausgebildet ist, wobei die Kennung, c, eine ganze Zahl ist und in einem Kennungszwischenspeicher abgelegt ist, wobei die Elementliste, S, eine Mehrzahl von aus einer Elementmenge ausgewählten Elementen aufweist, wobei die Elementmenge eine vorbestimmte Gesamtzahl, N, von Elementen aufweist, wobei jedes Element durch eine ganze Zahl $i \in \{0, ... , N - 1\}$ eindeutig repräsentiert ist, wobei eine Kardinalität, k, der zu ermittelnden Elementliste in einem Kardinalitätszähler (k) abgelegt ist, wobei die Kennungsdecodierungseinrichtung zur Durchführung der folgenden Schritte konfiguriert ist:

a) Ablegen (200) der Zahl 0 als Wert, b, in einem Begrenzungszähler;
b) Ablegen (201) der Zahl 0 als Wert, m, in einem Elementezähler;
c) Ablegen (202) einer leeren Liste als Elementliste, S;

d) Berechnen (204) des Binomialkoeffizienten $\binom{N - b - 1}{k - 1}$ und Ablegen des berechneten Binomialkoeffizienten als Wert, z, in einem Zwischenspeicher;

e) Vergleichen (206) des Wertes, c, des Kennungszwischenspeichers und des Wertes, z, des Zwischenspeichers sowie Fortfahren mit Schritt j), sofern der Kennungszwischenspeicher einen Wert, i, aufweist, der größer oder gleich dem Wert, z, des Zwischenspeichers ist, andernfalls Fortfahren mit Schritt f);
f) Reduzieren (208) des Wertes, c, des Kennungszwischenspeichers um den Wert, z, des Zwischenspeichers;
g) Erhöhen (210) des Wertes, b, des Begrenzungszählers um 1;
h) Vergleichen (212) des Wertes, b, des Begrenzungszählers mit der Gesamtzahl, N, und Fortfahren mit Schritt i), sofern die Werte b und N gleich sind, anderenfalls Fortfahren mit Schritt d);
i) Ausgeben (220) der Elementliste, S, als Ergebnis;
j) Hinzufügen (214) des Wertes, m, des Elementzählers zu der Elementliste, S;
k) Erhöhen (215) des Wertes, m, des Elementzählers um 1;
l) Verringern (216) des Wertes, k, des Kardinalitätszählers um 1;
m) Vergleichen (218) des Wertes, k, des Kardinalitätszählers mit 0, und Fortfahren mit Schritt i), wenn dies der Fall ist, ansonsten Fortfahren mit Schritt g).

3. Cachezuordnungseinrichtung (300), die zum Zuweisen von zwischenzuspeichernden Datenblöcken, die jeweils Teil einer Datei aus einer Datenbibliothek sind, zu Endgeräten (16a-16f, 50-55) in einem Netzwerk (10) ausgebildet ist, wobei einem Datenblock (22) eine Datenblockkennung, c, und ein Dateiidentifikator, f, zugewiesen ist, wobei die Endgeräte (50-55) zu einer Mehrzahl von Gruppen (70-73) zusammengefasst sind, wobei jede der Gruppen (70-73) durch einen Nutzeridentifikator eindeutig repräsentiert ist, wobei der Nutzeridentifikator eine ganze Zahl $i \in \{0, ... , N - 1\}$ ist, wobei die Cachezuordnungseinrichtung ausgebildet ist, als Eingabedaten eine Anzahl, N, der Gruppen (70-73), einen Systemparameter, k, einen Nutzeridentifikator, i, einer ausgewählten Gruppe, eine Datenblockkennung, c, und einen Dateiidentifikator, f, übergeben zu bekommen, wobei die Cachezuordnungseinrichtung eine Kennungsdecodierungseinrichtung (302) gemäß Anspruch 2 aufweist, die ausgebildet ist, aus der Anzahl, N, dem Systemparameter, k, der einem Kardinalitätszähler entspricht, und der Datenblockkennung, c, eine Elementliste, S, zu erzeugen, in der Gruppen (70-73) repräsentierende Nutzeridentifikatoren enthalten sind, deren zugehörige Endgeräte (50-55) ausgebildet sind, einen durch den Dateiidentifikator, f, identifizierbaren Datenblock (22) zwischenzuspeichern, wobei die Cachezuordnungseinrichtung (300) eine Entscheidungseinrichtung (304) aufweist, die zum Auffinden des Nutzeridentifikators, i, der ausgewählten Gruppe in der Elementliste, S, ausgebildet ist, wobei die Cachezuordnungseinrichtung (300) zur Erzeugung eines Zwischenspeichersignals ausgebildet ist, sofern der Nutzeridentifikator, i, der ausgewählten Gruppe in der Elementliste, S, enthalten ist und wobei die Cachezuordnungseinrichtung zur Erzeugung eines Nichtspeichersignals ausgebildet ist, sofern der Nutzeridentifikator, i, der ausgewählten Gruppe nicht in der Elementliste, S, enthalten ist.

4. Gruppencodierungseinrichtung (400) zum Ermitteln einer Liste, R', von gemeinsam codierbaren Anforderungen von Datenblöcken (22) einer Datenmenge aus einer Liste, R, von wartenden Anforderungen (22), wobei die Datenblöcke (22) von Endgeräten (16a-16f, 50-55) in einem Netzwerk (10) angefordert werden, wobei die Endgeräte (50-55) zu Gruppen (70-73) zusammengefasst sind, wobei die Liste, R, von wartenden Anforderungen Einträge von der Form (i, f, c) umfasst, wobei c eine Datenblockkennung eines angeforderten Datenblocks (22), f einen Dateiidentifikator eines angeforderten Datenblocks (22) und i einen Nutzeridentifikator einer Gruppe (70-73) eines anfordernden Endgerätes (50-55) in dem Netzwerk (10) darstellen, wobei die Endgeräte (50-55) einen Cachespeicher (60-65) aufweisen, wobei die Gruppencodierungseinrichtung zur Verarbeitung einer ausgewählten Anforderung (i, f, c) einer ausgewählten Gruppe (70-73) mit einem ausgewählten Nutzeridentifikator, i, und eines ausgewählten Datenblocks (22) mit einem ausgewählten Dateiidentifikator, f, mit einer Datenblockkennung, c, aufweist:

eine Kennungsdecodierungseinrichtung (402), die zum Ermitteln einer Liste, S, der Nutzeridentifikatoren von Gruppen (70-73) von Endgeräten (50-55), in deren zugeordneten Cachespeichern (60-65) der Datenblock (22) mit dem angeforderten Dateiidentifikator, f, vorgehalten wird, aus der Datenblockkennung, c, des ausgewählten Datenblock (22), ausgebildet ist;

eine Kandidatenermittlungseinrichtung (406) zum Ermitteln einer Liste von Tupeln (i', S'), wobei für jeden Nutzeridentifikator, i', der Liste S, eine Liste S' erzeugt wird, die sich durch Entnehmen des Nutzeridentifikators, i', aus der Liste, S, und Einsetzen des ausgewählten Nutzeridentifikators, i, der ausgewählten Anforderung (f, i) in die Liste, S, ergeben;

eine Kennungscodierungseinrichtung (408) zum Ermitteln einer Liste von Nutzeridentifikatoren, i', und Datenblockkennungen, c', wobei die Kennungscodierungseinrichtung (408) jeder Liste, S', eines Tupels (i', S') aus der von der Kandidatenermittlungseinrichtung (406) ermittelten Liste von Tupeln eine Kennung als Datenblockkennung, c', zuweist, wobei die Kennungscodierungseinrichtung (408) als Kennungscodierungseinrichtung gemäß Anspruch 1 ausgebildet ist und

eine Anforderungsauswahleinrichtung, die zum Ermitteln der Liste, R', mittels Verknüpfung der von der Kennungscodierungseinrichtung (408) ermittelten Liste und der Liste, R, von wartenden Anforderungen derart ausgebildet ist, dass je Eintrag, (i', c'), der von der Kennungscodierungseinrichtung (408) ermittelten Liste (414) höchstens ein Eintrag der Liste, R, der Form, (i, f, c), derart zur Aufnahme in die Liste, R', ausgewählt wird, dass i'=i und c'=c.

5. Kommunikationseinrichtung (500), die zum Umsetzen von Informationen über einen gemeinsam codierten Datenblock in Kopfdaten (506) ausgebildet ist, wobei die Kommunikationseinrichtung ausgebildet ist, als Informationen über den Datenblock eine Liste, V, von Nutzeridentifikatoren, i, eine Liste, T, von Dateiidentifikatoren, f, sowie ein Systemparameter, N, übergeben zu bekommen, wobei die Kommunikationseinrichtung (500) eine Kennungscodierungseinrichtung (502) gemäß Anspruch 1 aufweist, die zur Umsetzung der Liste, V, von Nutzeridentifikatoren, i, in einen Index, L, ausgebildet ist und eine Kopfdatenerzeugungseinrichtung (504) zur Umsetzung des Index, L, zusammen mit der Liste, T, von Datenidentifikatoren, f, in Kopfdaten (506) aufweist.

6. Dateisystemeinrichtung (600), die zum Zuweisen einer lokalen Datenblockkennung (d) zu einem Dateiidentifikator (f) ausgebildet ist, mit einer Kennungsdecodierungseinrichtung (602) nach Anspruch 2, die zum Erstellen einer Liste von Nutzeridentifikatoren, i, von Gruppen von Endgeräten (16a-16f, 50-55) in einem Netzwerk (10), die den mit dem Dateiidentifikator, f, bezeichneten Datenblock (22) vorhaltenden Gruppen umfasst, ausgebildet ist, und mit einer Abbildungseinrichtung (604), die zum Umsetzen der Liste von Nutzeridentifikatoren, i, in eine umgesetzte Liste, und mit einer Kennungscodierungseinrichtung (606) nach Anspruch 1, die zum Erhalten der lokalen Datenblockkennung aus der umgesetzten Liste ausgebildet ist.

7. Dateisystemeinrichtung (700), die zum Ermitteln einer Datenblockkennung, c, aus einer lokalen Datenblockkennung (d) ausgebildet ist, mit einer Kennungsdecodierungseinrichtung (702) nach Anspruch 2, die zum Erstellen einer Liste von Nutzeridentifikatoren, i, ausgebildet ist, mit einer Abbildungseinrichtung (704), die zum Umsetzen der Liste von Nutzeridentifikatoren, i, in eine umgesetzte Liste ausgebildet ist, und einer Kennungscodierungseinrichtung (706) nach Anspruch 1, die zum Erhalten der Datenblockkennung (c) aus der umgesetzten Liste ausgebildet ist.

8. Netzwerk (10), umfassend eine Mehrzahl von Endgeräten (16a-16f, 50-55), wobei die Endgeräte (16a-16f, 50-55) in dem Netzwerk (10) zum Empfangen von Daten ausgebildet sind, wobei Elemente (22) der Daten ausgebildet sind, in einem Cachespeicher (20a-20f) der Endgeräte (16a-16f, 50-55) zwischengespeichert zu werden sind, wobei jedes Element (22) ausgebildet ist, mittels einer Ganzzahl identifiziert zu werden, wobei wenigstens ein Endgerät (16a-16f) eine Kennungscodierungseinrichtung gemäß Anspruch 1 oder eine Kennungsdecodierungseinrichtung gemäß Anspruch 2 aufweist.

9. Server (18), der an ein Netzwerk (10) mit einer Mehrzahl von Endgeräten (16a-16f, 50-55) anschließbar ist, wobei die Endgeräte (16a-16f, 50-55) in dem Netzwerk (10) zum Empfangen von Daten von dem Server (18) ausgebildet sind, wobei Elemente (22) der Daten in einem Cachespeicher (20a-20f) der Endgeräte (16a-16f) zwischenspeicherbar sind, wobei jedes Element (22) ausgebildet ist, mittels einer Ganzzahl identifiziert zu werden, wobei der Server (18) eine Kennungscodierungseinrichtung gemäß Anspruch 1 oder eine Kennungsdecodierungseinrichtung gemäß Anspruch 2 aufweist.

**10.** Computerimplementiertes Kodierverfahren zur Kodierung einer Elementliste, S, von Identifikatoren zu einer Kennung bei der Verteilung einer Datenmenge von einem Server (18) an ein Netzwerk (10), wobei die Datenmenge eine Mehrzahl von Datenblöcken (22) umfasst, wobei das Netzwerk (10) eine Mehrzahl von Endgeräten (16a-16f, 50-55) umfasst, wobei jedes Endgerät (16a-16f, 50-55) einen Cachespeicher (20a-20f, 60-65) zum Zwischenspeichern von Datenblöcken (22) aufweist, wobei ein Cachezustand einen Zustand einer Menge von Datenblöcken (22) in einem Cachespeicher (20a-20f, 60-65) beschreibt, wobei

- entweder ein Identifikator einen Dateiidentifikator zum eindeutigen Identifizieren eines Datenblocks (22) der Datenmenge, wobei die Kennung den Cachezustand eines der Mehrzahl von Endgeräten (16a, 16f, 50-55) beschreibt,
- oder ein Identifikator einen Nutzeridentifikator zum eindeutigen Identifizieren eines Endgeräts (16a-16f, 50-55) oder einer Gruppe (70-73) von Endgeräten (50-55) in dem Netzwerk (10) aufweist, wobei die Kennung ein Endgerät (16a-16f, 50-55) oder eine Gruppe (70-73) von Endgeräten (50-55) mit einem bestimmten Cachezustand beschreibt,

wobei ein Identifikator ein Element einer Elementmenge darstellt, wobei die Elementmenge die Menge aller Identifikatoren in dem Netzwerk (10) repräsentiert, wobei die Kennung eindeutig der Elementliste, S, zugeordnet wird, wobei die Elementliste, S, eine Mehrzahl von aus der Elementmenge ausgewählten Elementen aufweist, wobei die Elementmenge eine vorbestimmte Gesamtzahl, N, von Elementen aufweist, wobei jedes Element durch eine ganze Zahl $i \in \{0, \ldots , N - 1\}$ eindeutig repräsentiert wird, **gekennzeichnet durch** die Schritte:

a) Abzählen (100) der Anzahl, k, der Elemente der Elementliste, S, und Ablegen der Anzahl, k, in einem Kardinalitätszähler;
b) Ablegen (101) der Zahl 0 als Wert, b, in einem Begrenzungszähler;
c) Ablegen (102) der Zahl 0 als Wert, c, in einem Zwischenspeicher;
d) Ablegen (103) des kleinsten Elements der Elementliste, S, als Wert, m, in einem Elementzwischenspeicher;
e) Entfernen (104) des kleinsten Elements aus der Elementliste, S;
f) Vergleichen (106) des Wertes, m, des Elementzwischenspeichers und des Wertes, b, des Begrenzungszählers sowie Fortfahren mit Schritt g), wenn die Werte identisch sind, sonst Fortfahren mit Schritt k);
g) Verringern (114) des Wertes, k, des Kardinalitätszählers um 1;
h) Vergleichen (116) des Wertes, k, des Kardinalitätszählers mit 0 und Fortfahren mit Schritt n), sofern der Wert, k, des Kardinalitätszählers gleich 0 ist, sonst Fortfahren mit Schritt i);
i) Erhöhen (118) des Wertes, b, des Begrenzungszählers um 1;
j) Feststellen (120), ob der Wert, b, des Begrenzungszählers der Gesamtzahl, N, von Elementen entspricht, falls ja, Fortfahren mit Schritt n), sonst Fortfahren mit Schritt d);
k) Berechnen (108) des Binomialkoeffizienten $\binom{N - b - 1}{k - 1}$ und Addieren des Ergebnisses zu dem Wert, c, des Zwischenspeichers;
l) Erhöhen (110) des Wertes, b, des Begrenzungszählers um 1;
m) Vergleichen (112) des Wertes, b, des Begrenzungszählers mit der Gesamtzahl, N, von Elementen und Fortfahren mit Schritt n), falls die Werte identisch sind, sonst Fortfahren mit Schritt f);
n) Übergeben (122) des Inhalts, c, des Zwischenspeichers als Kennung.

**11.** Verfahren gemäß Anspruch 10, **gekennzeichnet durch** wenigstens einen der Schritte:

o) Berechnen einer Zuordnungstabelle, die abhängig von der Gesamtzahl, N, von Elementen und der Kardinalität, k, der Elementliste vorberechnete Binomialkoeffizienten zur Verwendung in Schritt k) aufweist; und/oder
p) in Schritt k): Ermitteln des Binomialkoeffizienten anhand einer Zuordnungstabelle statt Berechnung des Binomialkoeffizienten.

**12.** Computerimplementiertes Dekodierverfahren zur Dekodierung einer Kennung, c, zu einer Elementliste, S, von Identifikatoren bei der Verteilung einer Datenmenge von einem Server (18) an ein Netzwerk (10), wobei die Datenmenge eine Mehrzahl von Datenblöcken (22) umfasst, wobei das Netzwerk (10) eine Mehrzahl von Endgeräten (16a-16f, 50-55) umfasst, wobei jedes Endgerät (16a-16f, 50-55) einen Cachespeicher (20a-20f, 60-65) zum Zwischenspeichern von Datenblöcken (22) aufweist, wobei ein Cachezustand einen Zustand einer Menge von Datenblöcken (22) in einem Cachespeicher (20a-20f, 60-65) beschreibt, wobei

- entweder ein Identifikator einen Dateiidentifikator zum eindeutigen Identifizieren eines Datenblocks (22) der Datenmenge aufweist, wobei die Kennung den Cachezustand eines der Mehrzahl von Endgeräten (16a, 16f, 50-55) beschreibt,
- oder ein Identifikator einen Nutzeridentifikator zum eindeutigen Identifizieren eines Endgeräts (16a-16f, 50-55) oder einer Gruppe (70-73) von Endgeräten (50-55) in dem Netzwerk (10) aufweist, wobei die Kennung ein Endgerät (16a-16f, 50-55) oder eine Gruppe (70-73) von Endgeräten (50-55) mit einem bestimmten Cachezustand beschreibt,

wobei ein Identifikator ein Element einer Elementmenge darstellt, wobei die Elementmenge die Menge aller Identifikatoren in dem Netzwerk (10) repräsentiert, wobei der Elementliste, S, eindeutig die Kennung, c, zugeordnet wird, wobei die Kennung, c, eine ganze Zahl ist und in einem Kennungszwischenspeicher abgelegt wird, wobei die Elementliste, S, eine Mehrzahl von aus einer Elementmenge ausgewählten Elementen aufweist, wobei die Elementmenge eine vorbestimmte Gesamtzahl, N, von Elementen aufweist, wobei jedes Element durch eine ganze Zahl $i \in \{0, \ldots, N - 1\}$ repräsentiert wird, wobei eine Kardinalität, k, der zu ermittelnden Elementliste in einem Kardinalitätszähler abgelegt ist, **gekennzeichnet durch** die Schritte:

a) Ablegen (200) der Zahl 0 als Wert, b, in einem Begrenzungszähler;
b) Ablegen (201) der Zahl 0 als Wert, m, in einem Elementezähler;
c) Ablegen (202) einer leeren Liste als Elementliste, S;
d) Berechnen (204) des Binomialkoeffizienten $\binom{N - b - 1}{k - 1}$ und Ablegen des berechneten Binomialkoeffizienten als Wert, z, in einem Zwischenspeicher;
e) Vergleichen (206) des Wertes, c, des Kennungszwischenspeichers und Wertes, z, des Zwischenspeichers sowie Fortfahren mit Schritt j), sofern der Kennungszwischenspeicher einen Wert, c, aufweist, der größer oder gleich dem Wert, z, des Zwischenspeichers ist, andernfalls Fortfahren mit Schritt f);
f) Reduzieren (208) des Wertes, c, des Kennungszwischenspeichers um den Wert, z, des Zwischenspeichers;
g) Erhöhen (210) des Wertes, b, des Begrenzungszählers um 1;
h) Vergleichen (212) des Wertes, b, des Begrenzungszählers mit der Gesamtzahl, N, und Fortfahren mit Schritt i), sofern die Werte gleich sind, anderenfalls Fortfahren mit Schritt d);
i) Ausgeben (220) der Elementliste, S, als Ergebnis;
j) Hinzufügen (214) des Wertes, m, des Elementzählers zu der Elementliste, S;
k) Erhöhen (215) des Wertes, m, des Elementzählers um 1;
l) Verringern (216) des Wertes, k, des Kardinalitätszählers um 1;
m) Vergleichen (218) des Wertes, k, des Kardinalitätszählers mit 0, und Fortfahren mit Schritt i), wenn dies der Fall ist, ansonsten Fortfahren mit Schritt g).

**13.** Verfahren gemäß Anspruch 12, **gekennzeichnet durch** wenigstens einen der Schritte:

n) Berechnen einer Zuordnungstabelle, die abhängig von der Gesamtzahl, N, von Elementen und der Kardinalität, k, der Elementliste vorberechnete Binomialkoeffizienten zur Verwendung in Schritt d) aufweist; und/oder
o) in Schritt d): Ermitteln des Binomialkoeffizienten anhand einer Zuordnungstabelle statt Berechnung des Binomialkoeffizienten.

**Claims**

**1.** An identification encoding device (30) adapted for coding an element list, S, of identifiers into an identification in the distribution of a data set from a server (18) to a network (10), the data set comprising a plurality of data blocks (22), the network (10) comprising a plurality of terminal devices (16a-16f, 50-55), each terminal device (16a-16f, 50-55) having a cache memory (20a-20f, 60-65) for caching data blocks (22) of the data set, a cache state describing a state of a set of data blocks (22) in a cache memory (20a-20f, 60-65), wherein

- either an identifier comprises a file identifier for uniquely identifying a data block (22) of the data set, the identification describing the cache state of one of the plurality of terminal devices (16a-16f, 50-55),

- or an identifier comprises a user identifier for uniquely identifying a terminal device (16a-16f, 50-55) or a group (70-73) of terminal devices (50-55) in the network (10), the identification describing a terminal device (16a-16f, 50-55) or a group (70-73) of terminal devices (50-55) having a particular cache state,

wherein an identifier represents an element of an element set, the element set representing the set of all identifiers in the network (10), the identification encoding device being designed for unambiguously assigning the identifier to the element list, S, wherein the element list, S, comprises a plurality of elements selected from the element set, the element set having a predetermined total number, N, of elements, each element being uniquely represented by an integer $i \in \{0,..., N - 1\}$, the identification encoding device being configured to perform the following steps:

a) counting (100) the number, k, of the elements of the element list, S, and storing the number, k, in a cardinality counter;
b) storing (101) the number 0 as a value, b, in a limit counter;
c) storing (102) the number 0 as a value, c, in a cache memory;
d) storing (103) the smallest element of the element list, S, as a value, m, in an element cache memory;
e) removing (104) the smallest element from the element list, S;
f) comparing (106) the value, m, of the element cache memory and the value, b, of the limit counter as well as proceeding with step g) if the values are identical, otherwise proceeding with step k);
g) decreasing (114) the value, k, of the cardinality counter by 1;
h) comparing (116) the value, k, of the cardinality counter with 0 and proceeding with step n) if the value of k is equal to 0, otherwise proceeding with step i);
i) increasing (118) the value, b, of the limit counter by 1;
j) determining (120) whether the value, b, of the limit counter corresponds to the total number, N, of elements, if so, proceeding with step n) otherwise proceeding with step d),
k) calculating (108) the binomial coefficient $\binom{N - b - 1}{k - 1}$ and adding the result to the value, c, of the cache memory;
l) increasing (110) the value, b, of the limit counter by 1;
m) comparing (112) the value, b, of the limit counter with the total number, N, of elements and proceeding with step n) if the values are identical, otherwise proceeding with step f);
n) transferring (122) the content, c, of the cache memory as an identification.

2. An identification decoding device (40) adapted for decoding an identification, c, into an element list, S, of identifiers in the distribution of a data set from a server (18) to a network (10), the data set comprising a plurality of data blocks (22), the network (10) comprising a plurality of terminal devices (16a-16f, 50-55), each terminal device (16a-16f, 50-55) having a cache memory (20a-20f, 60-65) for caching data blocks (22), a cache memory state describing a state of a set of data blocks (22) in a cache memory (20a-20f, 60-65), wherein

- either an identifier comprises a file identifier for uniquely identifying a data block (22) of the data set, the identification describing the cache memory state of one of the plurality of terminal devices (16a-16f, 50-55),
- or an identifier comprises a user identifier for uniquely identifying a terminal device (16a-16f, 50-55) or a group (70-73) of terminal devices (50-55) in the network (10), the identification describing a terminal device (16a-16f, 50-55) or a group (70-73) of terminal devices (50-55) with a particular cache memory state,

wherein an identifier represents an element of an element set, the element set representing the set of all identifiers in the network (10), the identification encoding device being adapted to allocate the element list, S, to the identification, c, the identification, c, being an integer and being stored in an identification cache memory, the element list, S, comprising a plurality of elements selected from an element set, the element set having a predetermined total number, N, of elements, each element being uniquely represented by an integer $i \in \{0,..., N - 1\}$,, a cardinality, k, of the element list to be determined being stored in a cardinality counter (k), the identification decoding device being configured to perform the following steps:

a) storing (200) the number 0 as a value, b, in a limit counter;
b) storing (201) the number 0 as a value, m, in an element counter;
c) storing (202) an empty list as an element list, S;

d) calculating (204) the binomial coefficient $\binom{N - b - 1}{k - 1}$ and storing the calculated binomial coefficient as a value, z, in a cache memory;

e) comparing (206) the value, c, of the identification cache memory and the value, z, of the cache memory, and proceeding with step j) if the identification cache memory has a value, i, which is greater than or equal to the value, z, of the cache memory, otherwise proceeding with step f);

f) decreasing (208) the value, c, of the identification cache memory by the value, z, of the cache memory;

g) increasing (210) the value, b, of the limit counter by 1;

h) comparing (212) the value, b, of the limit counter with the total number, N, and proceeding with step i) if the values b and N are equal, otherwise proceeding with step d);

i) outputting (220) the element list, S, as a result;

j) adding (214) the value, m, of the element counter to the element list, S;

k) increasing (215) the value, m, of the element counter by 1;

l) decreasing (216) the value, k, of the cardinality counter by 1;

m) comparing (218) the value, k, of the cardinality counter 0, and proceeding with step i) if this is the case, otherwise proceeding with step g).

3. A cache allocation device (300) adapted to allocate data blocks to be cached, each being part of a file from a data library, to terminal devices (16a-16f, 50-55) in a network (10), wherein a data block (22) is allocated a data block identification, c, and a file identifier, f, the terminal devices (50-55) being combined into a plurality of groups (70-73), each of said groups (70-73) being uniquely represented by a user identifier, said user identifier being an integer $i$ $\in \{0,..., N$ - $1\}$, the cache allocation device being adapted to be supplied as input data with a number, N, of the groups (70-73), a system parameter, k, a user identifier, i, of a selected group, a data block identification, c, and a file identifier, f, the cache allocation device comprising an identification decoding device (302) according to claim 2, which is adapted to generate from the number, N, the system parameter, k, corresponding to a cardinality counter, and the data block identification, c, an element list, S, containing user identifiers representing groups (70-73) whose associated terminal devices (50-55) are adapted to cache a data block (22) identifiable by the file identifier, f, the cache allocation device (300) comprising a decision device (304) adapted to find the user identifier, i, of the selected group in the element list, S, the cache allocation device (300) being adapted to generate a cache signal if the user identifier, i, of the selected group is included in the element list, S, and the cache allocation device being adapted to generate a non-memory signal if the user identifier, i, of the selected group is not included in the element list, S.

4. A group encoding device (400) for determining a list, R', of common encodable requests of data blocks (22) of a data set from a list, R, of waiting requests (22), the data blocks (22) of terminal device (16a-16f, 50-55) being requested in a network (10), the terminal devices (50-55) being combined into groups (70-73), the list, R, of waiting requests comprising entries of the form (i, f, c), wherein c represents a data block identification of a requested data block (22), f represents a file identifier of a requested data block (22), and i represents a user identifier of a group (70-73) of a requesting terminal device (50-55) in the network (10), said terminal devices (50-55) having a cache memory (60-65), said group encoding device for processing a selected request (i, f, c) of a selected group (70-73) having a selected user identifier, i, and a selected data block (22) having a selected file identifier, f, having a data block identification, c, comprising:

an identification decoding device (402) adapted to determine a list, S, of the user identifiers of groups (70-73) of terminal devices (50-55) in the associated cache memories (60-65) of which the data block (22) with the requested file identifier, f, is maintained, from the data block identification, c, of the selected data block (22);

a candidate determining device (406) for determining a list of tuples (i', S'), wherein for each user identifier, i', of the list, S, a list, S', is generated which result from removing the user identifier, i', from the list, S, and inserting the selected user identifier, i, of the selected request (f, i) in the list, S;

an identification encoding device (408) for determining a list of user identifiers, i', and data block identifications, c', wherein the identification encoding device (408) of each list, S'; of a tuple (i', S') assigns an identification from the list of tuples determined by the candidate determining device (406) as a data block identification, c', the identification encoding device (408) being designed as an identification encoding device according to claim 1, and

a request selection device which adapted to determine the list, R', by combining the list determined by the identification encoding device (408) and the list, R, of waiting requests in such a way that, for each entry, (i', c'), of the list (414) determined by the identification encoding device (408) at most one entry of the list, R, of the form, (i, f, c), is selected for inclusion in the list, R', in such a way that i'=i and c'=c.

5. A communication device (500) adapted to convert information about a commonly encoded data block into header data (506), the communication device being adapted to receive as information about the data block a list, V, of user identifiers, i, a list, T, of file identifiers, f, and a system parameter, N, wherein the communication device (500) comprises an identification encoding device (502) according to claim 1, adapted to convert the list, V, of user identifiers, i, into an index, L, and a header data generating device (504) for converting the index, L, together with the list, of data identifiers, f, into header data (506).

6. A file system device (600) used to assign a local data block identification (d) to a file identifier (f), comprising an identification decoding device (602) according to claim 2, which is adapted to create a list of user identifiers, i, of groups of terminal devices (16a-16f, 50-55) in a network (10), which comprises the groups maintaining the data block (22) designated by the file identifier, f, and comprising a mapping device (604) which is adapted to convert the list of user identifiers, i, into a converted list, and an identification encoding device (606) according to claim 1, which is adapted to obtain the local data block identification from the converted list.

7. A file system device (700) adapted to determine a data block identification, c, from a local data block identification (d), comprising an identification decoding device (702) according to claim 2 adapted to create a list of user identifiers, i, a mapping device (704) adapted to convert the list of user identifiers, i, into a converted list, and identification encoding device (706) according to claim 1 adapted to obtain the data block identification (c) from the converted list.

8. A network (10) comprising a plurality of terminal devices (16a-16f, 50-55), the terminal devices (16a-16f, 50-55) in the network (10) being adapted to receive data, elements (22) of the data being adapted to be cached in a cache memory (20a-20f) of the terminal devices (16a-16f, 50-55), each element (22) being adapted to be identified by means of an integer, wherein at least one terminal device (16a-16f) comprises an identification encoding device according to claim 1 or an identification decoding device according to claim 2.

9. A server (18) connectable to a network (10) having a plurality of terminal devices (16a-16f, 50-55), the terminal devices (16a-16f, 50-55) in the network (10) being adapted to receive data from the server (18), elements (22) of the data being cacheable in a cache memory (20a-20f) of the terminal devices (16a-16f), wherein each element (22) is adapted to be identified by means of an integer, wherein the server (18) comprises an identification encoding device according to claim 1 or an identification decoding device according to claim 2.

10. A computer-implemented coding method for coding a list of elements, S, of identifiers into an identification in the distribution of a set of data from a server (18) to a network (10), the set of data comprising a plurality of data blocks (22), the network (10) comprising a plurality of terminal devices (16a-16f, 50-55), each terminal device (16a-16f, 50-55) having a cache memory (20a-20f, 60-65) for caching data blocks (22), a cache state describing a state of a set of data blocks (22) in a cache memory (20a-20f, 60-65), wherein

   - either an identifier comprises a file identifier for uniquely identifying a data block (22) of the data set, the identification describing the cache state of one of the plurality of terminal devices (16a, 16f, 50-55),
   - or an identifier comprises a user identifier for uniquely identifying a terminal device (16a-16f, 50-55) or a group (70-73) of terminal devices (50-55) in the network (10), the identification describing a terminal device (16a-16f, 50-55) or a group (70-73) of terminal devices (50-55) having a particular cache state,

   wherein an identifier represents an element of an element set, the element set representing the set of all identifiers in the network (10), the identification being uniquely assigned to the element list, S, the element list, S, comprising a plurality of elements selected from the element set, the element set having a predetermined total number, N, of elements, each element being uniquely represented by an integer $i \in \{0,..., N - 1\}$, **characterized by** the steps:

   a) counting (100) the number, k, of the elements of the element list, S, and storing the number, k, in a cardinality counter;
   b) storing (101) the number O as a value, b, in a limit counter;
   c) storing (102) the number O as a value, c, in a cache;
   d) storing (103) the smallest element of the element list, S, as a value, in an element cache;
   e) removing (104) the smallest element from the element list, S;

f) comparing (106) the value, m, of the element cache of the value, b, of the limit counter as well as continue step g), if the values are identical, otherwise proceed with step k);

g) decreasing (114) the value, k, of the cardinality counter by 1;

h) comparing (116) the value, k, of the cardinality counter with 0 and proceeding with step n) if the value of k is equal to 0, otherwise proceeding with step i);

i) increasing (118) the value, b, of the limit counter by 1;

j) determining (120) whether the value, b, of the limit counter corresponds to the total number, N, of elements, if so, proceeding with step n) otherwise proceeding with step d),

k) calculating (108) the binomial coefficient $\binom{N-b-1}{k-1}$ and adding the result to the value, c, of the cache;

l) increasing (110) the value, b, of the limit counter by 1;

m) comparing (112) the value, b, of the limit counter with the total number, N, of elements and proceeding with step n) if the values are identical, otherwise proceeding with step f);

n) transferring (122) the content, c, of the cache as an identification.

**11.** Method according to claim 10, **characterized by** at least one of the steps:

o) calculating a mapping table having pre-calculated binomial coefficients depending on the total number, N, of elements and the cardinality, k, of the element list for use in step k); and/or

p) in step k): determining the binomial coefficient using an allocation table instead of calculating the binomial coefficient.

**12.** A computer-implemented decoding method for decoding an identification, c, to an element list, S, of identifiers in the distribution of a data set from a server (18) to a network (10), the data set comprising a plurality of data blocks (22), the network (10) comprising a plurality of terminal devices (16a-16f, 50-55), each terminal device (16a-16f, 50-55) having a cache memory (20a-20f, 60-65) for caching data blocks (22), a cache state describing a state of a set of data blocks (22) in a cache memory (20a-20f, 60-65), wherein

- either an identifier comprises a file identifier for uniquely identifying a data block (22) of the data set, the identification describing the cache memory state of one of the plurality of terminal devices (16a, 16f, 50-55),

- or an identifier comprises a user identifier for uniquely identifying a terminal device (16a-16f, 50-55) or a group (70-73) of terminal devices (50-55) in the network (10), the identification describing a terminal device (16a-16f, 50-55) or a group (70-73) of terminal devices (50-55) having a particular cache memory state,

wherein an identifier represents an element of an element set, the element set representing the set of all identifiers in the network (10), the element list, S, the element list, S, being uniquely assigned the identification, c, the identification, c, being an integer and stored in an identification cache memory, the element list, S, comprising a plurality of elements selected from the element set, the element set having a predetermined total number, N, of elements, each element being uniquely represented by an integer $i \in \{0,..., N - 1\}$, a cardinality, k, of the element list to be determined being stored in a cardinality counter, **characterized by** the steps:

a) storing (200) the number 0 as a value, b, in a limit counter;

b) storing (201) the number 0 as a value, m, in an element counter;

c) storing (202) an empty list as an element list, S;

d) calculating (204) the binomial coefficient $\binom{N-b-1}{k-1}$ and storing the calculated binomial coefficient as a value, z, in a cache;

e) comparing (206) the value, c, of the identification cache and the value, z, of the cache, and proceeding with step j) if the identification cache has a value, c, which is greater than or equal to the value, z, of the cache, otherwise proceeding with step f);

f) decreasing (208) the value, c, of the identification cache by the value, z, of the cache;

g) increasing (210) the value, b, of the limit counter by 1;

h) comparing (212) the value, b, of the limit counter with the total number, N, and proceeding with step i) if the values b and N are equal, otherwise proceeding with step d);

i) outputting (220) the element list, S, as a result;

j) adding (214) the value, m, of the element counter to the element list, S;

k) increasing (215) the value, m, of the element counter by 1;

l) decreasing (216) the value, k, of the cardinality counter by 1;

m) comparing (218) the value, k, of the cardinality counter 0, and proceeding with step i) if this is the case, otherwise proceeding with step g).

**13.** Method according to claim 12, **characterized by** at least one of the steps:

n) calculating an allocation table comprising pre-calculated binomial coefficients depending on the total number, N, of elements and the cardinality, k, of the element list for use in step d) and/or

o) in step d): determining the binomial coefficient using an allocation table instead of calculating the binomial coefficient.

**Revendications**

**1.** Dispositif de codage d'identification (30) adapté pour coder une liste d'éléments, S, d'identificateurs pour une identification dans la distribution d'une quantité de données d'un serveur (18) à un réseau (10), la quantité de données comprenant une pluralité de blocs de données (22), le réseau (10) comprenant une pluralité de dispositifs terminaux (16a-16f, 50-55), chaque dispositif terminal (16a-16f, 50-55) ayant une cache (20a-20f, 60-65) pour mettre en cache des blocs de données (22) de la quantité de données, un état de cache décrivant un état d'une quantité de blocs de données (22) dans une cache (20a-20f, 60-65), dans lequel

- soit un identificateur comprend un identificateur de fichier pour identifier de manière unique un bloc de données (22) de la quantité de données, l'identification décrivant l'état de la cache de l'un de la pluralité de dispositifs terminaux (16a-16f, 50-55),
- ou un identificateur comprend un identificateur d'utilisateur pour identifier de manière unique un dispositif terminal (16a-16f, 50-55) ou un groupe (70-73) de dispositifs terminaux (50-55) dans le réseau (10), l'identification décrivant un dispositif terminal (16a-16f, 50-55) ou un groupe (70-73) de dispositifs terminaux (50-55) ayant un état de cache particulier,

dans lequel un identificateur représente un élément d'une quantité d'éléments, la quantité d'éléments représentant la quantité de tous les identificateurs dans le réseau (10), le dispositif de codage d'identification étant conçu pour allouer de manière unique l'identificateur à la liste d'éléments, S, dans lequel la liste d'éléments, S, comprend une pluralité d'éléments sélectionnés dans la quantité d'éléments, la quantité d'éléments ayant un nombre total prédéterminé, N, d'éléments, chaque élément étant représenté de manière unique par un nombre entier $i \in \{0,..., N-1\}$, le dispositif de codage d'identification étant configuré pour effectuer les étapes suivantes:

a) compter (100) le nombre, k, des éléments de la liste d'éléments, S, et stocker le nombre, k, dans un compteur de cardinalité;

b) stocker (101) le nombre 0 comme valeur, b, dans un compteur de limites;

c) stocker (102) le nombre 0 comme une valeur, c, dans une cache;

d) stocker (103) le plus petit élément de la liste d'éléments, S, en tant que valeur, m, dans une cache d'éléments;

e) éliminer (104) le plus petit élément de la liste d'éléments, S;

f) comparer (106) la valeur, m, de la cache d'éléments et la valeur, b, du compteur de limites et continuer avec l'étape g) si les valeurs sont identiques, sinon continuer avec l'étape k);

g) diminuer (114) de 1 la valeur, k, du compteur de cardinalité;

h) comparer (116) la valeur, k, du compteur de cardinalité avec 0 et continuer avec l'étape n) si la valeur, k, est égale à 0, si non, continuer avec l'étape i);

i) augmenter (118) de 1 la valeur, b, du compteur de limite;

j) déterminer (120) si la valeur, b, du compteur de limite correspond au nombre total, N, d'éléments, si c'est le cas, continuer avec l'étape n), si non, continuer avec l'étape d),

k) calculer (108) le coefficient binomial $\binom{N-b-1}{k-1}$ et ajouter le résultat à la valeur, c, de la cache;

l) augmenter (110) de 1 la valeur, b, du compteur de limite;

m) comparer (112) la valeur, b, du compteur de limite avec le nombre total, N, d'éléments et continuer avec l'étape n) si les valeurs sont identiques, si non, continuer avec l'étape f);

n) transférer (122) le contenu, c, de la cache comme une identification.

**2.** Dispositif de décodage d'identification (40) adapté pour décoder une identification, c, en une liste d'éléments, S, d'identificateurs dans la distribution d'une quantité de données d'un serveur (18) à un réseau (10), la quantité de données comprenant une pluralité de blocs de données (22), le réseau (10) comprenant une pluralité de dispositifs terminaux (16a-16f, 50-55), chaque dispositif terminal (16a-16f, 50-55) ayant une cache (20a-20f, 60-65) pour mettre en cache des blocs de données (22) de la quantité de données, un état de la cache décrivant un état d'une quantité de blocs de données (22) dans une cache (20a-20f, 60-65), dans lequel

- soit un identificateur comprend un identificateur de fichier pour identifier de manière unique un bloc de données (22) de la quantité de données, l'identification décrivant l'état de la cache de l'un de la pluralité de dispositifs terminaux (16a-16f, 50-55),
- ou un identificateur comprend un identificateur d'utilisateur pour identifier de manière unique un dispositif terminal (16a-16f, 50-55) ou un groupe (70-73) de dispositifs terminaux (50-55) dans le réseau, l'identification décrivant un dispositif terminal (16a-16f, 50-55) ou un groupe (70-73) de dispositifs terminaux (50-55) ayant un état de cache particulier,

dans lequel un identificateur représente un élément d'une quantité d'éléments, la quantité d'éléments représentant la quantité de tous les identificateurs dans le réseau (10), le dispositif de codage d'identification étant conçu pour allouer la liste d'éléments, S, à l'identification, c, l'identification, c, étant un nombre entier et stockée dans une cache d'identification, la liste d'éléments, S, comprenant une pluralité d'éléments sélectionnés dans la quantité d'éléments, la quantité d'éléments ayant un nombre total prédéterminé, N, d'éléments, chaque élément étant représenté de manière unique par un nombre entier $i \in \{0,..., N - 1\}$, une cardinalité, k, de la liste d'éléments à déterminer étant enregistrée dans un compteur de cardinalités (k), le dispositif de codage d'identification étant configuré pour effectuer les étapes suivantes:

a) stocker (200) le nombre 0 comme valeur, b, dans un compteur de limites;
b) stocker (201) le nombre 0 comme valeur, m, dans un compteur d'éléments;
c) stocker (202) une liste vide comme une liste d'éléments, S;
d) calculer (204) le coefficient binomial $\binom{N - b - 1}{k - 1}$ et stocker le coefficient binomial calculé comme valeur, z, dans une cache;
e) comparer (206) la valeur, c, de la cache d'identification et la valeur, z, de la cache et continuer avec l'étape j) si la cache d'identification présente une valeur, i, supérieure ou égale à la valeur, z, de la cache, si non, continuer avec l'étape f);
f) diminuer (208) de la valeur, z, la valeur, c, de la cache d'identification;
g) augmenter (210) de 1 la valeur, b, du compteur de limite;
h) comparer (212) la valeur, b, du compteur de limite avec le nombre total, N, et continuer avec l'étape i) si les valeurs b et N sont identiques, si non, continuer avec l'étape d);
i) sortie (220) de la liste d'éléments, S, comme résultat;
j) ajouter (214) la valeur, m, du compteur d'éléments à la liste, S;
k) augmenter (215) de 1 la valeur, m, le compteur d'éléments;
l) diminuer (216) de 1 la valeur, k, du compteur de cardinalité;
m) comparer (218) la valeur, k, du compteur de cardinalité avec 0 et continuer avec l'étape i) si c'est le cas, si non, continuer avec l'étape g).

**3.** Dispositif d'allocation de cache (300) adapté pour allouer des blocs de données à mettre en cache, chacun faisant partie d'un fichier provenant d'une bibliothèque de données, à des dispositifs terminaux (16a-16f, 50-55) dans un réseau (10), dans lequel un bloc de données (22) est alloué une identification de bloc de données, c, et un identificateur de fichier, f, les dispositifs terminaux (50-55) étant combinés en une pluralité de groupes (70-73), chacun desdits groupes (70-73) étant représenté de manière unique par un identificateur d'utilisateur, ledit identificateur d'utilisateur étant un nombre entier $i \in \{0,..., N - 1\}$, le dispositif d'allocation de cache étant adapté pour recevoir comme données d'entrée un nombre, N, des groupes (70-73), un paramètre système, k, un identificateur d'utilisateur, i, d'un groupe sélectionné, une identification de bloc de données, c, et un identificateur de fichier, f, le dispositif d'allocation de cache comprenant un dispositif de décodage d'identification (302) selon la revendication 2, qui est adapté pour générer à partir du nombre, N, du paramètre système, k, correspondant à un compteur de cardinalité, et de l'identification de bloc de données, c, une liste d'éléments, S, contenant des identificateurs d'utilisateur représentant des groupes (70-73) dont les dispositifs terminaux associés (50-55) sont adaptés pour mettre en cache un bloc de données (22) identifiable par l'identificateur de fichier, f, le dispositif d'allocation de cache (300) comprenant un dispositif de décision (304) adapté pour trouver l'identificateur d'utilisateur, i, du groupe sélectionné dans la liste d'éléments, S, le dispositif d'allocation de cache (300) étant adapté pour générer un signal de cache si l'identificateur d'utilisateur, i, du groupe sélectionné est inclus dans la liste d'éléments, S, et le dispositif d'allocation de cache étant adapté pour générer un signal de non-mémoire si l'identificateur d'utilisateur, i, du groupe sélectionné n'est pas inclus dans la liste d'éléments, S.

4. Dispositif de codage de groupe (400) pour déterminer une liste, R', de demandes codables communes de blocs de données (22) d'une quantité de données dans une liste, R, de demandes en attente (22), les blocs de données (22) étant demandés des dispositifs terminaux (16a-16f, 50-55) dans un réseau (10), les dispositifs terminaux (50-55) étant combinés en groupes (70-73), la liste, R, de demandes en attente comprenant des entrées de la forme (i, f, c), dans laquelle c représente une identification de bloc de données d'un bloc de données demandé (22), f représente un identificateur de fichier d'un bloc de données demandé (22), et i représente un identificateur d'utilisateur d'un groupe (70-73) d'un dispositif terminal demandeur (50-55) dans le réseau (10), lesdits dispositifs terminaux (50-55) ayant une cache (60-65), ledit dispositif de codage de groupe pour traiter une demande sélectionnée (i, f, c) d'un groupe sélectionné (70-73) ayant un identificateur d'utilisateur sélectionné, i, et un bloc de données sélectionné (22) ayant un identificateur de fichier sélectionné, f, ayant une identification de bloc de données, c, comprenant:

   un dispositif de décodage d'identification (402) adapté pour déterminer une liste, S, des identificateurs d'utilisateur de groupes (70-73) de dispositifs terminaux (50-55) dans les caches associées (60-65) desquelles le bloc de données (22) avec l'identificateur de fichier demandé, f, est maintenu, à partir de l'identification de bloc de données, c, du bloc de données sélectionné (22);
   un dispositif de détermination de candidats (406) pour déterminer une liste de tuples (i', S'), dans lequel pour chaque identificateur d'utilisateur, i', de la liste, S, une liste, S', est générée qui résulte du retrait de l'identificateur d'utilisateur, i', de la liste, S, et de l'insertion de l'identificateur d'utilisateur sélectionné, i, de la demande sélectionnée (f, i) dans la liste, S ;
   un dispositif de codage d'identification (408) pour déterminer une liste d'identificateurs d'utilisateurs, i', et d'identifications de blocs de données, c', dans lequel le dispositif de codage d'identification (408) de chaque liste, S', d'un tuple (i', S') dans la liste de tuples déterminée par le dispositif de détermination de candidats (406) attribue une identification comme une identification de bloc de données, c', le dispositif de codage d'identification (408) étant conçu comme un dispositif de codage d'identification selon la revendication 1, et
   un dispositif de sélection de demandes adapté pour déterminer la liste R' en combinant la liste déterminée par le dispositif de codage d'identification (408) et la liste R des demandes en attente de telle sorte que, pour chaque entrée (i', c') de la liste (414) déterminée par le dispositif de codage d'identification (408), au plus une entrée de la liste R de la forme (i, f, c) est sélectionnée pour être incluse dans la liste R' de telle sorte que i'=i et c'=c.

5. Dispositif de communication (500) adapté pour convertir des informations concernant un bloc de données codées en commun en données d'en-tête (506), le dispositif de communication étant adapté pour recevoir en tant qu'informations concernant le bloc de données une liste, V, d'identificateurs d'utilisateur, i, une liste, T, d'identificateurs de fichier, f, et un paramètre de système, N, dans lequel le moyen de communication (500) comprend un dispositif de codage d'identification (502) selon la revendication 1, adapté pour convertir la liste, V, d'identificateurs d'utilisateur, i, en un index, L, et un dispositif de génération de données d'en-tête (504) pour convertir l'index, L, conjointement avec la liste, T, d'identificateurs de données, f, en données d'en-tête (506).

6. Dispositif de système de fichiers (600) utilisé pour allouer une identification de bloc de données local (d) à un identificateur de fichier (f), comprenant un dispositif de décodage d'identification (602) selon la revendication 2, qui est adapté pour créer une liste d'identificateurs d'utilisateur, i, de groupes de dispositifs terminaux (16a-16f, 50-55) dans un réseau (10) qui comprend les groupes conservant le bloc de données (22) désigné par l'identificateur de fichier, f, et comprenant un dispositif de mappage (604) qui est adapté pour convertir la liste d'identificateurs d'utilisateur, i, en une liste convertie, et un dispositif de codage d'identification (606) selon la revendication 1, qui est adapté pour obtenir l'identification de bloc de données local dans la liste convertie.

7. Dispositif de système de fichiers (700) adapté pour déterminer une identification de bloc de données, c, dans une identification de bloc de données local (d), comprenant un dispositif de décodage d'identification (702) selon la revendication 2 adapté pour créer une liste d'identificateurs d'utilisateur, i, un dispositif de mappage (704) adapté pour convertir la liste d'identificateurs d'utilisateur, i, en une liste convertie, et un dispositif de codage d'identification (706) selon la revendication 1 adapté pour obtenir l'identification de bloc de données (c) dans la liste convertie.

8. Réseau (10) comprenant une pluralité de dispositifs terminaux (16a-16f, 50-55), les dispositifs terminaux (16a-16f, 50-55) dans le réseau (10) étant adaptés pour recevoir des données, des éléments (22) des données étant adaptés pour être mis en cache dans une cache (20a-20f) des dispositifs terminaux (16a-16f, 50-55), chaque élément (22) étant adapté pour être identifié au moyen d'un nombre entier, dans lequel au moins un dispositif terminal (16a-16f) comprend un dispositif de codage d'identification selon la revendication 1 ou un dispositif de décodage d'identification selon la revendication 2.

9. Serveur (18) pouvant être connecté à un réseau (10) ayant une pluralité de dispositifs terminaux (16a-16f, 50-55), les dispositifs terminaux (16a-16f, 50-55) dans le réseau (10) étant adaptés pour recevoir des données du serveur (18), des éléments (22) des données pouvant être mis en cache dans une cache (20a-20f) des dispositifs terminaux (16a-16f), dans lequel chaque élément (22) est adapté pour être identifié au moyen d'un nombre entier, dans lequel le serveur (18) comprend un dispositif de codage d'identification selon la revendication 1 ou un dispositif de décodage d'identification selon la revendication 2.

10. Procédé de codage mis en oeuvre par ordinateur pour coder une liste d'éléments, S, d'identificateurs en une identification dans la distribution d'une quantité de données d'un serveur (18) à un réseau (10), la quantité de données comprenant une pluralité de blocs de données (22), le réseau (10) comprenant une pluralité de dispositifs terminaux (16a-16f, 50-55), chaque dispositif terminal (16a-16f, 50-55) ayant une cache (20a-20f, 60-65) pour mettre en cache des blocs de données (22), un état de cache décrivant un état d'une quantité de blocs de données (22) dans une cache (20a-20f, 60-65), dans lequel

- soit un identificateur comprend un identificateur de fichier pour identifier de manière unique un bloc de données (22) de la quantité de données, l'identification décrivant l'état de la cache de l'un de la pluralité de dispositifs terminaux (16a,16f, 50-55),
- ou un identificateur comprend un identificateur d'utilisateur pour identifier de manière unique un dispositif terminal (16a-16f, 50-55) ou un groupe (70-73) de dispositifs terminaux (50-55) dans le réseau (10), l'identification décrivant un dispositif terminal (16a-16f, 50-55) ou un groupe (70-73) de dispositifs terminaux (50-55) ayant un état de cache particulier,

dans lequel un identificateur représente un élément d'une quantité d'éléments, la quantité d'éléments représentant la quantité de tous les identificateurs dans le réseau (10), l'identification étant allouée de manière unique à la liste d'éléments, S, la liste d'éléments, S, comprenant une pluralité d'éléments sélectionnés dans la quantité d'éléments, la quantité d'éléments ayant un nombre total prédéterminé, N, d'éléments, chaque élément étant représenté de manière unique par un nombre entier $i \in \{0,..., N - 1\}$, le dispositif de codage d'identification étant configuré pour effectuer les étapes suivantes:

a) compter (100) le nombre, k, des éléments de la liste d'éléments, S, et stocker le nombre, k, dans un compteur de cardinalité;
b) stocker (101) le nombre 0 comme valeur, b, dans un compteur de limites;
c) stocker (102) le nombre 0 comme une valeur, c, dans une cache;
d) stocker (103) le plus petit élément de la liste d'éléments, S, en tant que valeur, m, dans une cache d'éléments;
e) éliminer (104) le plus petit élément de la liste d'éléments, S;
f) comparer (106) la valeur, m, de la cache d'éléments et la valeur, b, du compteur de limites et continuer avec l'étape g) si les valeurs sont identiques, si non, continuer avec l'étape k);
g) diminuer (114) de 1 la valeur, k, du compteur de cardinalité;
h) comparer (116) la valeur, k, du compteur de cardinalité avec 0 et continuer avec l'étape n) si la valeur, k, est égale à 0, si non, continuer avec l'étape i);
i) augmenter (118) de 1 la valeur, b, du compteur de limite;
j) déterminer (120) si la valeur, b, du compteur de limite correspond au nombre total, N, d'éléments, si c'est le cas, continuer avec l'étape n), si non, continuer avec l'étape d),
k) calculer (108) le coefficient binomial $\binom{N-b-1}{k-1}$ et ajouter le résultat à la valeur, c, de la cache;
l) augmenter (110) de 1 la valeur, b, du compteur de limite;

m) comparer (112) la valeur, b, du compteur de limite avec le nombre total, N, d'éléments et continuer avec l'étape n) si les valeurs sont identiques, si non, continuer avec l'étape f);

n) transférer (122) le contenu, c, de la cache comme une identification.

**11.** Procédé selon la revendication 10, **caractérisé par** au moins l'une des étapes suivantes :

o) calculer une table d'allocation comprenant des coefficients binomiaux précalculés en fonction du nombre total, N, d'éléments et de la cardinalité, k, de la liste d'éléments à utiliser à l'étape k); et/ou

p) à l'étape k): déterminer le coefficient binomial en utilisant une table d'allocation au lieu de calculer le coefficient binomial.

**12.** Procédé de décodage mis en oeuvre par ordinateur pour décoder une identification, c, en une liste d'éléments, S, d'identificateurs dans la distribution d'une quantité de données d'un serveur (18) à un réseau (10), la quantité de données comprenant une pluralité de blocs de données (22), le réseau (10) comprenant une pluralité de dispositifs terminaux (16a-16f, 50-55), chaque dispositif terminal (16a-16f, 50-55) ayant une cache (20a-20f, 60-65) pour mettre en cache des blocs de données (22), un état de la cache décrivant un état d'une quantité de blocs de données (22) dans une cache (20a-20f, 60-65), dans lequel

- soit un identificateur comprend un identificateur de fichier pour identifier de manière unique un bloc de données (22) de la quantité de données, l'identification décrivant l'état de la cache de l'un de la pluralité de dispositifs terminaux (16a,16f, 50-55),

- ou un identificateur comprend un identificateur d'utilisateur pour identifier de manière unique un dispositif terminal (16a-16f, 50-55) ou un groupe (70-73) de dispositifs terminaux (50-55) dans le réseau (10), l'identification décrivant un dispositif terminal (16a-16f, 50-55) ou un groupe (70-73) de dispositifs terminaux (50-55) ayant un état de cache particulier,

dans lequel un identificateur représente un élément d'une quantité d'éléments, la quantité d'éléments représentant la quantité de tous les identificateurs dans le réseau (10), la liste d'éléments, S, étant allouée de manière unique l'identification, c, l'identification, c, étant un nombre entier et stockée dans une cache d'identification, la liste d'éléments, S, comprenant une pluralité d'éléments sélectionnés dans la quantité d'éléments, la quantité d'éléments ayant un nombre total prédéterminé, N, d'éléments, chaque élément étant représenté de manière unique par un nombre entier $i \in \{0,..., N - 1\}$, une cardinalité, k, de la liste d'éléments à déterminer étant stockée dans un compteur de cardinalité, **caractérisé par** les étapes suivantes:

a) stocker (200) le nombre 0 comme valeur, b, dans un compteur de limites;

b) stocker (201) le nombre 0 comme valeur, m, dans un compteur d'éléments;

c) stocker (202) une liste vide comme une liste d'éléments, S;

d) calculer (204) le coefficient binomial $\binom{N - b - 1}{k - 1}$ et stocker le coefficient binomial calculé comme valeur, z, dans une cache;

e) comparer (206) la valeur, c, de la cache d'identification et la valeur, z, de la cache et continuer avec l'étape j) si le cache d'identification présente une valeur, z, supérieure ou égale à la valeur de la cache, si non, continuer avec l'étape f);

f) diminuer (208) de la valeur, z, la valeur, c, de la cache d'identification;

g) augmenter (210) de 1 la valeur, b, du compteur de limite;

h) comparer (212) la valeur, b, du compteur de limite avec le nombre total, N, et continuer avec l'étape i) si les valeurs b et N sont identiques, si non, continuer avec l'étape d);

i) sortie (220) de la liste d'éléments, S, comme résultat;

j) ajouter (214) la valeur, m, du compteur d'éléments à la liste, S;

k) augmenter (215) de 1 la valeur, m, le compteur d'éléments;

l) diminuer (216) de 1 la valeur, k, du compteur de cardinalité;

m) comparer (218) la valeur, k, du compteur de cardinalité avec 0 et continuer avec l'étape i) si c'est le cas, si non, continuer avec l'étape g).

**13.** Procédé selon la revendication 12, **caractérisé par** au moins une des étapes suivantes:

n) calculer une table d'allocation comprenant des coefficients binomiaux précalculés en fonction du nombre total, N, d'éléments et de la cardinalité, k, de la liste d'éléments à utiliser à l'étape d) et/ou

o) à l'étape d): détermination du coefficient binomial en utilisant une table d'allocation au lieu de calculer le coefficient binomial.

N, S

| 100 |
| 101 |
| 102 |

| 103 |
| 104 |

106

114

108

116

110

118

112

120

122

c

Fig. 1

30

N,k,c

```
┌─────────────────┐
│       200       │
├─────────────────┤
│       201       │
├─────────────────┤
│       202       │
└─────────────────┘
```

40

```
┌─────────────────┐
│       204       │
└─────────────────┘
```

```
┌─────────────────┐
│       206       │
└─────────────────┘
```

```
┌─────────────────┐          ┌─────────────────┐
│       214       │          │       208       │
├─────────────────┤          └─────────────────┘
│       215       │
├─────────────────┤          ┌─────────────────┐
│       216       │          │       210       │
└─────────────────┘          └─────────────────┘

┌─────────────────┐          ┌─────────────────┐
│       218       │          │       212       │
└─────────────────┘          └─────────────────┘

          ┌─────────────────┐
          │       220       │
          └─────────────────┘
```

S

Fig. 2

Fig. 3

Fig. 4

Fig. 5

Fig. 6

c $\longrightarrow$ 402

i

N,k

R
$[(i_j,f_j,c_j), ...]$

406

412 $[(i',S'), ...]$

408

414 $[(i',c'), ...]$

410

400

R'
$[(i_j,f_j,c_j), ...]$

Fig. 7

N

V

T

502

L

504

(L,T)

500

306

Fig. 8

N,k,i

c

602

604

606

d

600

Fig. 9

N,k,i

d

702

704

706

c

700

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20150207881 A1
- US 20150207895 A1
- US 20150207896 A1
- US 20120254459 A1
- DE 102014102898 A1

### In der Beschreibung aufgeführte Nicht-Patentliteratur

- Permutations and combinations. **PEMMARAJU S ; SKIENA S.** COMPUTATIONAL DISCRETE MATHEMATICS. CAMBRIDGE UNIVERSITY PRESS, 01. Januar 2003, 53-90